**Europäisches Patentamt**

**European Patent Office**

**Office européen des brevets**

(19)

(11) Veröffentlichungsnummer: **0 076 436**
**B1**

(12) EUROPÄISCHE PATENTSCHRIFT

(45) Veröffentlichungstag der Patentschrift:
**23.04.86**

(51) Int. Cl.⁴: **A 22 C 13/00**

(21) Anmeldenummer: **82108819.2**

(22) Anmeldetag: **24.09.82**

(54) Für zu räuchernde Lebensmittel, insbesondere für zu räuchernde Wurstwaren geeignete Schlauchhülle, Verfahren zu ihrer Herstellung und ihre Verwendung.

(30) Priorität: **03.10.81 DE 3139481**

(43) Veröffentlichungstag der Anmeldung:
**13.04.83 Patentblatt 83/15**

(45) Bekanntmachung des Hinweises auf die Patenterteilung:
**23.04.86 Patentblatt 86/17**

(84) Benannte Vertragsstaaten:
**AT BE CH DE FR GB IT LI LU NL SE**

(56) Entgegenhaltungen:
**DE - B - 1 492 708**
**FR - A - 2 163 623**
**US - A - 2 607 696**

(73) Patentinhaber: **HOECHST AKTIENGESELLSCHAFT,**
**Postfach 80 03 20, D-6230 Frankfurt am Main 80 (DE)**

(72) Erfinder: **Hutschenreuter, Elfriede, Hardtstrasse 116,**
**D-6208 Bad Schwalbach (DE)**
Erfinder: **Andrä, Klaus, Dr.,**
**Konrad-Adenauer-Strasse 10, D-6501 Zornheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Schlauchhülle von der im Oberbegriff des Anspruchs 1 genannten Art, auf ein Verfahren zu ihrer Herstellung und auf ihre Verwendung.

Schlauchhüllen dieser Art werden durch längsaxiales Falten einer Bahn zu einem Schlauch und Verkleben der sich überlappenden, längsaxial sich erstreckenden Randzonen hergestellt.

Nach der US-A 2 607 696 wird eine Randzone der Bahn aus regenerierter Cellulose mit einer sauren, wässrigen Lösung eines teilweise polymerisierten, hitzehärtbaren Harzes versehen und anschliessend die andere Randzone der Bahn unter Schlauchformung mit der Harzschicht zusammengepresst. Danach werden die sich überlappenden Randzonen bei etwa 180 bis 220°C unter Einwirkung von Druck, wobei das Harz hitzegehärtet wird, miteinander verbunden. Als Harze werden beispielsweise Harnstoff-Formaldehyd- und Melamin-Formaldehyd-Harze genannt. Diese Schlauchhülle kann nach Angabe dieser Druckschrift auch als Wursthülle zur Herstellung hautloser Würstchen verwendet werden, wobei die Schlauchhülle nach dem Kochvorgang von der Wurst abgeschält wird.

Dieses bekannte, etwa 30 Jahre alte Verfahren wird kaum mehr ausgeübt. Insbesondere ist die erhaltene Überlappungsnaht nicht ausreichend fest. Wegen der relativ geringen Reissfestigkeit der Naht besteht z.B. die erhöhte Gefahr, dass daraus hergestellte Würste aufplatzen. Ferner kann die bekannte Schlauchhülle nur relativ umständlich hergestellt werden. Insbesondere führen die hohen Temperaturen während der Verklebung zu einem unerwünschten Wasserverlust sowie einer bleibenden Verschlechterung der physikalischen Eigenschaften des Bahnmaterials, so dass die erhaltene Schlauchhülle z.B. für das anschliessende Raffen zur Herstellung von Raupen nicht geeignet ist. Andererseits ist aber nach dieser Druckschrift das Erhitzen auf Temperaturen von über 180°C nach dem Klebstoffantrag erforderlich, um überhaupt eine Verbindung zwischen den sich überlappenden Randzonen der Bahn zu erreichen. Ferner ist dieser Veröffentlichung kein Hinweis zu entnehmen, dass der Nahtbereich ausreichend gas- und rauchdurchlässig ist, so dass diese Schlauchhüllen auch für zu räuchernde Lebensmittel verwendet werden können.

Wegen dieser Nachteile werden Schlauchhüllen für Lebensmittel, insbesondere künstliche Wursthüllen, inzwischen überwiegend aus nahtlosem Material hergestellt, obwohl bei diesen nahtlosen Schlauchhüllen auch einige Nachteile akzeptiert werden müssen; insbesondere ist dieses Verfahren sehr kostenintensiv.

Nahtlose Schläuche aus faserverstärkter regenerierter Cellulose werden üblicherweise nach folgenden wesentlichen Verfahrensschritten hergestellt. Eine Bahn aus einem Faservliesstoff wird zu einem Schlauch geformt, wobei sich die Randzonen der Bahn überlappen und mit Viskose verklebt werden. Nach ein- oder beidseitiger Beschichtung des Schlauchs aus Faservliesstoff mit Viskose aus Ringschlitzdüsen wird die Viskose koaguliert, zu Cellulosehydrat-Gel regeneriert und getrocknet. Nahtlose Schläuche aus nichtfaserverstärkter regenerierter Cellulose werden durch Extrusion von Viskose durch eine ringförmige Düse in das Koagulationsbad hergestellt und analog in regenerierte Cellulose überführt. Der Schlauch wird während der Koagulation und Regenerierung durch das entstehende Gasgemisch und während des Trocknens durch ein eingebrachtes eingeschlossenes Luftvolumen abgestützt und gegebenenfalls zur Verbesserung der mechanischen Eigenschaften in Längs- und Querrichtung gestreckt.

Nachteiligerweise treten beispielsweise an den Kanten des flachgelegten Schlauchs während der Regenerierung längsaxial im Kantenbereich sich erstreckende Schwächungszonen, sogenannte Spinnkanten, auf.

Ferner zeigen auch die bei den nahtlosen Schläuchen üblichen Streckverfahren Nachteile. Sowohl der Innendruck der im Schlauch sich entwickelnden Prozessgase als auch der Innendruck beim Trocknen kann nicht präzise genug gesteuert werden, so dass der Durchmesser und die Wandstärke der nahtlosen Schläuche, selbst unter Anwendung einer komplizierten und aufwendigen Verfahrenstechnik, innerhalb enger Grenzen nicht konstant gehalten werden kann. Ferner ist es von Nachteil, dass beim Strecken von Schläuchen mit einem Spreizgas das Verhältnis der in tangentialer und radialer Richtung wirksamen Streckkräfte festgelegt ist, so dass der nahtlose Schlauch auch aus diesem Grund bezüglich seiner mechanischen Eigenschaften, insbesondere bezüglich der Schrumpfeigenschaften und der Festigkeit in Längs- und Querrichtung, festgelegt ist.

Ausgehend von dem aufgezeigten Stand der Technik ist es deshalb Aufgabe der Erfindung, eine gegebenenfalls faserverstärkte Schlauchhülle aus regenerierter Cellulose vorzuschlagen, die alle die genannten Nachteile der bekannten Schlauchhüllen nicht aufweist. Die Schlauchhülle muss optimale mechanische Eigenschaften, insbesondere Schrumpf- und Festigkeitswerte, besitzen. Insbesondere ihre Verklebungsnaht muss relativ hohen mechanischen und thermischen Belastungen, z.B. Dehnungsbelastungen und der Einwirkung von heissem Wasser, standhalten und den Geschmack und das Aussehen des Lebensmittels nicht beeinträchtigen. Sie soll auch mit üblichen Raffvorrichtungen zu Raupen gerafft werden können.

Eine besonders wesentliche Aufgabe besteht darin, eine Hülle zu schaffen, die im Verklebungsbereich ausreichend gas- und rauchdurchlässig ist, bei gleichzeitig grosser Reissfestigkeit. Eine solche Hülle ist für Nahrungsmittel, die geräuchert werden sollen, z.B. für spezielle Brühwürste oder Dauerwurstwaren, deren Hülle gegebenenfalls auch abschälbar sein muss, oder für andere Lebensmittel, z.B. für bestimmte Käsearten, vorgesehen.

Eine zusätzliche Aufgabe der vorliegenden Erfindung besteht darin, eine Schlauchhülle aus gegebenenfalls faserverstärkter regenerierter Cellulose vorzuschlagen, die auf einfachere Weise aus einer Bahn hergestellt werden kann, insbesondere bei normalen Raumtemperaturen und kurzen Verweilzeiten bis zum Trocknen des Klebstoffs.

Eine Aufgabe der Erfindung besteht auch darin, eine gerade, im wesentlichen krümmungsfreie und faltenfreie Schlauchhülle mit einer Naht zu schaffen, die auch unter Einwirkung von Wasser und beim Schrumpfen ihre krümmungsfreie und faltenfreie Form auch im Nahtbereich beibehält, trotz der relativ grossen Hüllendicke in diesem Bereich. Schliesslich ist es auch Aufgabe der Erfindung, eine Öffnungshilfe vorzusehen, die ein leichteres und hygienisches Entfernen der Hülle vom Inhalt gestattet, ohne dass Schwachstellen an der Schlauchhülle vorgesehen werden müssen.

Diese Aufgabe wird überraschenderweise gelöst mit der in Anspruch 1 genannten Schlauchhülle. Die Ansprüche 2 bis 8 geben weitere Ausführungsformen der Schlauchhülle an. Die Aufgabe wird ferner gelöst durch ein Verfahren zur Herstellung der Schlauchhülle mit den im Anspruch 9 genannten Merkmalen. Die Ansprüche 10 bis 12 beschreiben weitere Ausbildungen des Verfahrens. Gegenstand der Erfindung ist ausserdem die in den Ansprüchen 13 bis 15 angegebene Verwendung.

Diese Hülle zeigt überraschenderweise den Vorteil, dass sie bei der Einwirkung von Wärme und Wasser, wie dies beispielsweise beim Brühen und anschliessendem Abkühlen von Wursthüllen geschieht, ihre gerade, krümmungsfreie Form beibehält. Dies ist besonders überraschend und nicht vorhersehbar, denn es ist an sich zu erwarten, dass die Hülle bei Einwirkung von Wärme und Wasser, aufgrund der verschiedenen Wandstärken im Nahtbereich einerseits und im übrigen Bereich andererseits und der daraus zu erwartenden unterschiedlichen Werte für die Festigkeit, für das Wasseraufnahme- und Wasserrückhaltevermögen, sich krümmt oder ungleichmässig ausdehnt oder schrumpft und sogar zum Platzen neigt.

Die Bildung einer Schlauchhülle mit einer Naht oder mehreren längsaxial sich erstreckenden Nähten durch Verklebung der Randbereiche der längsaxial sich erstreckenden Randzonen ist an sich bekannt, wozu auf die eingangs zitierte US-Patentschrift verwiesen wird.

Entsprechend der vorliegenden Erfindung wird ein um seine Längsachse gebogener, blatt- oder bahnförmiger rechteckiger Folienzuschnitt oder eine entsprechend gebogene, z.B. endlose Folienbahn aus Cellulose gegebenenfalls mit einem Verankerungsmittel für den Klebstoff auf ihrer Oberfläche durch Überlappung und Verklebung der längsaxial sich erstreckenden Randbereiche mit einer Klebstoff enthaltenden Lösung oder Dispersion in eine Schlauchhülle mit einer längsaxial sich erstreckenden Verbindungsnaht übergeführt. Der Einfachheit halber wird im folgenden anstelle von «blatt- oder bahnförmigen Zuschnitten» und «endlosen Bahnen» nur von Bahnen gesprochen. Die Klebstoff enthaltende Schicht im Überlappungsbereich wird in Form einer Lösung oder Dispersion auf die gegebenenfalls vorhandene Verankerungsschicht aufgebracht. Es ist auch möglich, die Randzonen in der Weise miteinander zu verbinden, dass die Ränder bündig, d.h. mit den Kanten zumindest im wesentlichen aneinanderstossend, einander genähert werden und dann mit einem Band, Film- bzw. Folienstreifen, im folgenden als Folienstreifen bezeichnet, der beide Randzonen überdeckt, miteinander verbunden werden. Der Folienstreifen befindet sich dann auf der Aussenseite oder Innenseite der Schlauchhülle, oder es werden parallel zueinander verlaufende Folienstreifen verwendet, von denen sich dann einer auf der Innenseite und einer auf der Aussenseite der Schlauchhülle befindet. Ein oder mehrere Folienstreifen können auch verwendet werden, wenn die Randzonen sich überlappen. Die Klebstoffschicht wird in Form einer Lösung oder Dispersion unmittelbar vor der Herstellung der Verbindungsnaht auf die Randzonen der Bahn und/oder gegebenenfalls auf die Oberflächen des Folienstreifens aufgebracht, z.B. mit einer Düse oder einer Antragswalze.

Der Folienstreifen hat zweckmässigerweise eine Breite von 5 bis 15% des Schlauchumfangs und besteht vorzugsweise aus dem gleichen Material wie die Schlauchhülle, d.h. aus rauchdurchlässiger, gegebenenfalls faserverstärkter Cellulose, wobei dessen Festigkeitswerte in Längs- und Querrichtung im gleichen Bereich wie beim Schlauchmaterial liegen. Sofern jedoch auf die krümmungsfreie Form der Schlauchhülle kein besonderer Wert gelegt wird, ist es auch möglich, einen perforierten, genadelten oder gelochten Folienstreifen aus Papier oder aus streckorientierter Kunststoffolie wie Polyester-, Vinylidenchlorid-Copolymerisat, Polyvinylchlorid- oder Polypropylen-Folie oder einen Folienverbund aus zwei oder mehr Folien, z.B. mit einer Aluminiumfolie, oder einen rauchdurchlässigen Vliesstoff, z.B. einen adhäsiv, mechanisch oder thermisch verfestigten Faservliesstoff aus wirr oder geordnet abgelegten Spinnfasern, Filamenten oder multiplen Filamentgarnen aus synthetischem oder nativem Material, oder eine rauchdurchlässige Schaumfolie mit offenporiger oder geschlossenporiger Schaumstruktur, z.B. aus Polyurethan oder Polystyrol, zu verwenden.

Auch rauchdurchlässige mikroporöse Folien sind geeignet, worunter auch Membranen mit einem Porendurchmesser zu verstehen sind, wie sie beispielsweise Membranen besitzen, die bei der Reversosmose, Ultrafiltration, Dialyse oder Hämofiltration oder als Batterie- oder Brennstoffzellen-Diaphragmen eingesetzt werden.

Ebenso sind Bänder aus engmaschigem Gewebe, Netzwerk oder Gitter, die z.B. aus Fäden in Kette und Schuss gewebt sind, als rauchdurchlässige Folienstreifen zur Verbindung der Randzonen geeignet. Es ist somit wesentlich, dass der Folienstreifen aufgrund seiner Struktur oder chemischen Zusammensetzung geeignet ist, den Räucherrauch durch die Verbindungsnaht der Schlauchhülle durchtreten zu lassen. Vorzugsweise werden jedoch kompakte Folienstreifen aus rauchdurchlässigem Material, insbesondere der oben genannte Folienstreifen aus Cellulose, gegebenenfalls mit Faserverstärkung, verwendet, wobei dann eine zusätzliche rauchdurchlässige Struktur des Folienstreifens, z.B. in Form von Poren oder Lochungen, nicht erforderlich ist.

Überraschenderweise lässt sich der Folienstreifen aus gegebenenfalls faserverstärkter Cellulose mit den für das Schlauchmaterial angegebenen mechanischen Eigenschaften auch als Aufreissband für den mit Füllgut gefüllten Schlauch, insbesondere für Wursthüllen, die vom Inhalt ohne grossen Aufwand abgezogen werden sollen, verwenden. Hierzu werden z.B. nach dem Anschneiden der Wurst rechts und links unmittelbar neben dem Folienstreifen kleine Einschnitte in die Wursthülle vorgenommen, so dass der Folienstreifen und der mit ihm verklebte Hüllenteil eine Art Grifflasche bildet. Beim Anziehen dieser Grifflasche reisst die Wursthülle rechts und links neben dem Folienstreifen in längsaxialer Richtung ein.

Die Formung der Bahn zu einem Schlauch erfolgt beispielsweise entweder auf einer genügend langen Wegstrecke, so dass keine Verzerrungen und Faltenbildung erfolgen, oder durch Umlenkung über ein schulterartiges Formwerkzeug. Wenn der Schlauch geformt ist, grenzen die beiden Seitenkanten der Bahn im wesentlichen abstandslos aneinander oder überlappen sich. Mittels am Schlauchumfang angreifender Transportelemente wird der Schlauch über die Oberfläche eines im Schlauchinneren angeordneten Stützkörpers bewegt. Der gegebenenfalls verwendete Folienstreifen wird vor dem Nahtschluss vorzugsweise mit seiner in Richtung zur inneren Oberfläche des Schlauches weisenden Klebstoffschicht so zwischen die Oberfläche des Stützkörpers und den aneinanderstossenden Rändern der Bahn eingeführt, dass die durch die Ränder der Bahn gebildete Stossnaht etwa die Mittellinie des Folienstreifens bildet, wobei der Folienstreifen beide Randzonen im wesentlichen gleich breit überdeckt. Die Verklebung kann durch Kontakt mit einer Walze erfolgen, wobei auf die Verklebungsstelle zusätzlich Druck ausgeübt werden kann; gegebenenfalls kann man auch geringfügig Wärme einwirken lassen, wobei die Verklebungsstelle möglichst unter 40°C gehalten wird. Von einer Druckanwendung und Wärmezufuhr wird jedoch gewöhnlich abgesehen, da sie zu einer unerwünschten Veränderung, insbesondere Versprödung und Austrocknung des Bahnmaterials führen kann. Überschüssige Klebstofflösung kann aus dem Nahtbereich beispielsweise durch eine Walze mit schwammartiger Oberfläche oder mit Abstreifern entfernt werden. Gewöhnlich ist allerdings das Wasseraufnahmevermögen (Quellwert) des Bahnmaterials ausreichend, um überschüssiges wässriges Lösungs- oder Dispersionsmittel aufzunehmen. Bahnbewegung und Verklebung können taktweise oder kontinuierlich erfolgen. Es ist besonders überraschend und nicht vorhersehbar, dass die erfindungsgemässe Kombination aus Klebstoff und Bahnmaterial sowie gegebenenfalls Verankerungsmittel zu einer schnellen Trocknung der Klebstoffschicht vorzugsweise bereits bei Raumtemperatur führt. Unter Raumtemperatur sind Temperaturen zwischen etwa 15 und 30°C zu verstehen. Dieser Effekt hat den weiteren Vorteil, dass die gebildeten Schlauchhüllen bereits nach 1 bis 3 Sekunden nach der Nahtbildung aufgewickelt werden können, ohne dass die Naht verrutscht. Nach einer Lagerzeit von etwa 1 bis 3 Tagen bei einer Temperatur bis zu 40°C, vorzugsweise bei Raumtemperatur, ist der Klebstoff vollständig ausgehärtet, und die Naht kann dann grösseren Belastungen, wie sie z.B. bei der Wurstherstellung auftreten, ausgesetzt werden.

Als Basismaterial für die Herstellung der Schlauchhülle dienen Bahnen aus Cellulose, d.h. aus Zellglas, regenerierter Cellulose oder Cellulosehydrat, die gegebenenfalls mit einer Fasereinlage verstärkt sind, wie sie zur Verpackung von Lebensmitteln, insbesondere als Wursthüllenmaterial, üblich sind. So können Cellulosebahnen, die nach dem Viskoseverfahren (US-A 3 884 270), durch Denitrierung von Cellulosenitrat oder Hydrolyse anderer Celluloseester, z.B. Deacetylierung von Celluloseacetat mit wässriger oder alkoholischer Alkalilösung (US-A 3 546 209) hergestellt wurden, eingesetzt werden. Im folgenden wird der Einfachheit halber nur von Cellulosebahnen gesprochen. Die Herstellung von Cellulosebahnen ist bekannt und soll im folgenden nur beispielhaft beschrieben werden.

Die Faserverstärkung ist insbesondere bahnförmig, z.B. eine Papierbahn, und besteht gewöhnlich aus Fasern, wie sie bei der Herstellung von Papier oder Reispapier verwendet werden, oder aus nativen Fasern wie Hanf- oder Flachsfasern oder synthetischen Fasern wie Polyamid-, Polyester- oder Polyacrylnitril-Fasern. Faserverstärkung ist z.B. ein textiles Gebilde wie ein Faservliesstoff.

Die Faserbahn wird vorzugsweise beidseitig mit einer Viskoselösung behandelt, insbesondere in eine Viskoselösung getaucht oder mit einer Viskoselösung beschichtet, und anschliessend in regenerierte Cellulose übergeführt. Es ist auch möglich, in die Viskose Verstärkungsfasern einzuarbeiten. Die Fasern enthaltende Viskose wird dann durch eine Düse in das Koagulationsbad ausgepresst unter Bildung einer Gelbahn. Wird nicht-faserverstärkte regenerierte Cellulose als Bahnmaterial eingesetzt, wird die Viskose direkt durch eine Düse in das Koagulationsbad ausgepresst.

Die Viskoselösung ist bekanntlich eine alkalische Lösung von Natrium-Celluloseexanthogenat. Nach der Reifung wird die Viskose auf die Faserbahn aufgebracht und/oder direkt versponnen, d.h. koaguliert. Das Spinnbad enthält beispielsweise Schwefelsäure, ferner Natriumsulfat und/oder Ammoniumsulfat.

Nach der Koagulation wird das aus Viskose-Gel bestehende gegebenenfalls faserverstärkte bahnförmige Produkt in saurem Medium zu Cellulosehydrat-Gel regeneriert, zur Entfernung von Säure und Salzen mit Wasser gewaschen, entschwefelt, gegebenenfalls durch ein Bleichbad und schliesslich durch ein Weichmacherbad mit z.B. wässriger 5 bis 20%iger Glycerinlösung geführt.

Im vorliegenden Fall wird die Bahn aus Cellulosehydrat-Gel vor dem Trocknen gegebenenfalls mit einer das Verankerungsmittel enthaltenden Lösung oder Dispersion behandelt und die Trocknung bei Temperaturen zwischen 65 bis 140, insbesondere 80 bis 110°C durchgeführt. Die erhaltene Bahn aus regenerierter Cellulose wird durch Konditionierung auf einen Wassergehalt von etwa 4 bis 15, insbesondere 7 bis 10, Gew.% eingestellt. Die Cellulosehydratbahnen zeigen nach der Trocknung einen Weichmachergehalt von etwa 7 bis 25 Gew.% und eine Dicke von etwa 20 bis 50, vorzugsweise 25 bis 30 μm, entsprechend einem Flächengewicht von 30 bis 75 g/m², die Dicke der faserverstärkten Cellulosehydratbahnen liegt bei etwa 50 bis 200 μm, entsprechend einem Flächengewicht von 50 bis 250 g/m².

In besonders bevorzugter Ausführungsform zeigt die Cellulosebahn hohe Werte für die Reissfestigkeit und Reissdehnung, wie im folgenden noch angegeben wird. Zur Herstellung einer faserverstärkten Cellulosebahn mit diesen Werten wird beispielsweise die Faserbahn, insbesondere während die Viskose regeneriert wird und anschliessend bis zum abschliessenden Trockenprozess, gegebenenfalls aber auch bereits während der Beschichtung mit Viskose, an den Rändern festgehalten, so dass ein Schrumpfen der Bahn verhindert wird. Das Festhalten der Faserbahn geschieht beispielsweise mit Nadelwalzen, Nadelbändern oder Nadelketten, die ein- oder mehrreihig ausgebildet sind. Diese ergreifen die Faserbahn an den beiden Rändern, so dass die Breite der Bahn während des gesamten Prozesses konstant gehalten wird. Die Zahl der Einstiche in den Randzonen ist möglichst gering zu halten, damit die Festigkeit der Bahn möglichst wenig verringert wird. Andererseits muss eine ausreichende Anzahl der Einstiche vorhanden sein, um eine ausreichende Schrumpfverhinderung zu gewährleisten. Auch Greifkluppenketten oder eine schnurförmige Führung aus säure- und alkalibeständigem Material, z.B. aus entsprechendem Kunststoff, können zum Festhalten der Ränder der Faserbahn eingesetzt werden. Bei der schnurfömigen Führung wird die Faserbahn an beiden Rändern mit jeweils einer Schnur festgehalten, wobei der Rand um diese Schnur gelegt und durch Kleben oder Schmelzen unter Hitzeeinwirkung oder mit einem Klebstoff befestigt ist. Diese Schnur läuft z.B. in einer Führungsschiene. Auch können sogenannte Breitzugwalzen zur Breithaltung der Bahn angewendet werden.

Zur Herstellung einer faserverstärkten Cellulosebahn mit hoher Reissfestigkeit wird die Bahn aus dem Cellulosehydrat-Gel beispielsweise während des Trockenprozesses am Schrumpfen gehindert und dabei zusätzlich in Querrichtung, vorzugsweise um etwa 5 bis 15, insbesondere 7 bis 12%, gestreckt, bezogen auf die ursprüngliche Breite der Faserbahn. Sofern während der Regenerierung ein geringer Schrumpf der Bahn in Querrichtung eingetreten ist, wird das Ausmass der Querstreckung während des Trocknens entsprechend erhöht. Vor diesem Strecken wird gegebenenfalls eine Vortrocknung durchgeführt, bei der die Hauptmenge an Wasser entfernt wird, bis die Bahn aus Cellulosehydrat-Gel einen Wassergehalt von etwa 80 bis 150 Gew.% aufweist.

In dieser bevorzugten Ausführungsform erfolgt keine weitergehende Streckung quer zur Bahnrichtung, ebenso unterbleibt eine eigene Längsstreckungsstufe. Der während des Prozesses, insbesondere beim Koagulieren, Regenerieren und Trocknen, auftretende Schrumpf der Bahn in Längsrichtung wird aufgehoben vor allem durch die auf die Bahn in Längsrichtung ausgeübte Zugkraft, die benötigt wird, um die Bahn durch die einzelnen Behandlungsstufen durchzuziehen.

Die infolge der schrumpfverhindernden Massnahmen und der Querverstreckung während des Trockenprozesses erreichten Festigkeitswerte der Bahn in Längs- und Querrichtung sind besonders vorteilhaft für die Herstellung der faserverstärkten Schlauchhülle mit einer Längsnaht und für den aus dem gleichen Material bestehenden Folienstreifen zur Verbindung der Randzonen der Bahn.

Cellulosebahnen ohne Faserverstärkung mit hoher Reissfestigkeit und Reissdehnung erhält man durch Längs- und/oder Querstreckung vor und/oder während der Trockenstufe. Verfahren dieser Art sind bekannt.

Die Messung der Reissfestigkeit und der Reissdehnung erfolgt mit einer elektronischen Reissmaschine nach DIN 53 455. Unter Reissfestigkeit ist die Widerstandsfähigkeit des Probekörpers gegenüber der Zugbeanspruchung im Augenblick des Reissens zu verstehen. Sie wird gemessen als Reisskraft (N), bezogen auf den Querschnitt (mm²). Die Reissdehnung ist die prozentuale Verlängerung des Probekörpers gegenüber der Ausgangslänge bei Belastung im Augenblick des Reissens und wird in Prozent angegeben.

Im Falle der faserverstärkten Cellulosebahn hat der Probekörper im konditionierten Zustand eine Länge von 100 mm, eine Breite von 15 mm und eine Dicke von 100 bis 110 μm. Der Probekörper aus nichtfaserverstärkter Cellulose hat eine Länge von 100 mm, eine Breite von 15 mm und eine Dicke von ca. 25 bis 30 μm.

Für einen nassen, d.h. in Wasser von ca. 20°C 30 Minuten lang gewässerten Probekörper aus dem nichtfaserverstärkten Bahnmaterial liegt die Reissfestigkeit in Längsrichtung bei 15 bis 30, insbesondere 20 bis 25 N/mm² und die Reissdehnung bei 40 bis 60, insbesondere 50 bis 55%. Die Reissfestigkeit in Querrichtung ist gleich, vorzugsweise aber grösser im Verhältnis zur Reissfestigkeit in Längsrichtung und zeigt Werte 15 bis 30, insbesondere von 20 bis 30 N/mm². Die Reissdehnung in Querrichtung liegt im Wertebereich von 100 bis 160, insbesondere 145 bis 155%.

Bei einem getrockneten Probekörper aus dem nichtfaserverstärkten Bahnmaterial, der eine Restfeuchte von 8 bis 10 Gew.% Wasser und 15 bis 21 Gew.% Glycerin enthält, liegt die Reissfestigkeit in Längsrichtung bei 70 bis 140, insbesondere 110 bis 120 N/mm² und die Reissdehnung bei 10 bis 28, insbesondere 16 bis 22%. Die Reissfestigkeit in Querrichtung zeigt Werte von 70 bis 90, insbesondere 75 bis 85 N/mm². Die Reissdehnung des getrockneten Probekörpers in Querrichtung liegt bei 50 bis 80, insbesondere 60 bis 65%.

Für einen nassen, d.h. in Wasser von ca. 20°C 30 Minuten lang gewässerten Probekörper aus dem faserverstärkten Bahnmaterial liegt die Reissfestigkeit in Längsrichtung bei 15 bis 30, insbesondere 20 bis 30 N/mm² und die Reissdehnung bei 30 bis 50, insbesondere 30 bis 40%. Die Reissfestigkeit in Querrichtung ist gleich, vorzugsweise aber grösser im Verhältnis zur Reissfestigkeit in Längsrichtung und zeigt Werte zwischen 15 bis 35, insbesondere von 25 bis 35 N/mm². Die Reissdehnung in Querrichtung liegt im gleichen Wertebereich wie in Längsrichtung, d.h. 30 bis 50, insbesondere 30 bis 40%.

Bei einem getrockneten Probekörper aus dem faserverstärkten Bahnmaterial, der eine Restfeuchte von 8 bis 10 Gew.% Wasser und 20 bis 22 Gew.% Glycerin enthält, liegt die Reissfestigkeit in Längsrichtung bei 50 bis 70, insbesondere 55 bis 65 N/mm² und die Reissdehnung bei 10 bis 22, insbesondere 12 bis 15%. Die Reissfestigkeit in Querrichtung ist gleich gross, vorzugsweise aber grösser im Verhältnis zur Reissfestigkeit in Längsrichtung und zeigt Werte zwischen 50 bis 75, insbesondere 65 bis 75 N/mm². Die Reissdehnung des getrockneten Probekörpers liegt bei 8 bis 19, insbesondere 8 bis 12%.

Für die Verwendung des Cellulosematerials als Basismaterial für künstliche Wursthüllen sind die in Querrichtung gemessenen Werte von besonderer Bedeutung, da die vom Füllgut ausgehenden Kräfte sich in Querrichtung erstrecken.

Unter Haftvermittler in bezug auf Klebstoffe sind bekanntlich Stoffe oder Stoffgemische zu verstehen, die vor dem Klebstoffauftrag auf eine oder beide Klebflächen aufgebracht werden, um die Haftung zwischen Klebstoff und Klebflächen zu verbessern. Im vorliegenden Fall soll der gegebenenfalls verwendete Haftvermittler die Klebstoffschicht auf der Bahn und/oder Folienstreifen, insbesondere wenn diese aus faserverstärktem Material bestehen, nassfest verankern. Bei nichtfaserverstärktem Material für die Bahn und Folienstreifen wird vorzugsweise kein Haftvermittler eingesetzt. Der Haftvermittler wird im folgenden als haftvermittelndes Harz oder Verankerungsmittel bezeichnet. Das Verankerungsmittel befindet sich zwischen der Klebstoffschicht und der Bahnoberfläche bzw. zwischen der Klebstoffschicht und der Oberfläche des Folienstreifens und ist vorzugsweise ein wasserunlösliches hitzegehärtetes, kationisches Harz. Polyurethanharze, Nitrocellulose und andere als wasserunlösliche Verankerungsmittel bekannte Verbindungen können ebenfalls eingesetzt werden.

Obwohl das Verankerungsmittel im Prinzip nur im Bereich der zu verklebenden Flächen der endlosen Bahn vorhanden sein müsste, ist es aus technischen Gründen zweckmässig, eine Oberfläche, für bestimmte Anwendungen oder überlappende Klebungen auch beide Oberflächen, der Bahn vollflächig mit einer oder zwei verschiedenen haftvermittelnden Harzschichten zu versehen.

Zusätzlich kann die Bahn auf der die spätere Innenseite der Schlauchhülle bildenden Oberfläche ein übliches Mittel zur Verbesserung der Schälbarkeit der Schlauchhülle aufweisen. Solche Schlauchhüllen werden zur Herstellung von hautlosen Würstchen verwendet. Die Schlauchhülle wird von der Wurst von Hand oder mit einer Abschälmaschine abgelöst, nachdem sich eine Eigenhaut des Würstchens gebildet hat. Zu diesen Mitteln zählen z.B. wasserlösliche Proteine, wie Gelatin, Eialbumin und Glutenin, insbesondere Cellulosederivate, wie Celluloseether und Celluloseester, Silikon- und Mineralöle und Fettsäureglyceride. Eine geeignete Innenbeschichtung umfasst beispielsweise einen Celluloseether, ein kationisches, hitzehärtbares Harz und Mineralöle (US-A 4 207 353), ein natürliches Öl, ein Triglyceridgemisch, eine chemisch modifizierte Stärke, einen teilverseiften Polyvinylalkohol und mikrokristalline Cellulose (US-A 4 248 900), ein emulgiertes Mineralöl und acetyliertes Fettsäuremonoglycerid (GB-A 1 381 231), Celluloseether, ein tierisches oder pflanzliches Öl, Mineralöl, Siliconöl und ein wasserlösliches Addukt eines Alkylenoxids mit einem Fettsäureteilester (US-A 3 898 348). Diese die leichte Ablösbarkeit der Hülle fördernde Beschichtungszusammensetzung wird durch übliches Einfüllen einer Beschichtungsflüssigkeit in die Schlauchhülle oder durch Aufsprühen in die Schlauchhülle aufgebracht. Im letzten Fall wird z.B. die wässrige Überzugszusammensetzung beim Raffprozess durch den hohlen Dorn auf die innere Oberfläche der Schlauchhülle aufgesprüht. Sofern die Überzugsmischung auf die Bahn noch vor der Schlauchbildung aufgebracht werden soll, müssen die zu verklebenden Randbereiche der Bahn frei von diesem Überzug bleiben. Hierzu erfolgt der Auftrag der Überzugslösung mit einer entsprechend breiten Auftragsvorrichtung, z.B. mit einer Walze unter Freilassung der Randzonen oder vollflächig, wobei dann die Randzonen, beispielsweise mit einem Rakel, von der Überzugslösung befreit werden.

Vorzugsweise wird die Bahn aus koaguliertem, aber noch nicht getrocknetem Cellulosehydrat-Gel mit einer Lösung oder Dispersion überzogen, die bis zu 10, insbesondere etwa 0,1 bis 0,5 Gew.% eines Verankerungsmittels, insbesondere eines dispergierbaren, wärmehärtbaren kationischen Harzes enthält. Bei faserverstärkten Bahnen liegt die bevorzugte Konzentration bei 1 bis 5 Gew.%. Während der üblichen Trocknung der Cellulosebahn bei Temperaturen von 65 bis 140°C, insbesondere 80 bis 110°C, bei der der Feuchtigkeitsgehalt der Cellulosebahn auf Werte von 4 bis 15, insbesondere 7 bis 10 Gew.% herabgesetzt wird, wird das kationische Harz zumindest teilpolymerisiert und geht dabei in seine wasserunlösliche hitzegehärtete Form über. Das Harz ist nach der Wärmehärtung dauerhaft mit der Oberfläche der Bahn verbunden. Die Verfahrensbedingungen werden vorteilhafterweise so gewählt, dass die gebildete Schichtdicke des Verankerungsmittels nach dem Trocknen bei faserverstärkter Cellulosebahn einem Flächengewicht von etwa 0,3 bis 1,5 g/m² und bei nichtfaserverstärkter Cellulosebahn einem niedrigeren Flächengewicht von etwa 0,01 bis 0,1 g/m² entspricht, das für diese Bahnen ausreichend ist.

Der Auftrag des Verankerungsmittels wird vor, gleichzeitig mit oder nach der Behandlung der Bahn aus Cellulosehydrat-Gel mit einem üblichen Weichmacher, z.B. einem Polyol wie Glycerin, vorgenommen. Man kann das Verankerungsmittel zwar auch erst nach dem Trocknen der Cellulosebahn aufbringen, was jedoch den Nachteil zeigt, dass eine zusätzliche Trockenstufe zur Entfernung des Lösungs- bzw. Dispergiermittels und gegebenenfalls zur Härtung des kationischen Harzes erforderlich ist.

Als geeignete Lösungsmittel für das Verankerungsmittel, insbesondere für das hitzehärtbare Harz und auch für den Klebstoff, können niedrige aliphatische oder aromatische Kohlenwasserstoffe, niedrige Alkohole oder Ester oder Mischungen dieser Lösungsmittel eingesetzt werden. Vorteilhaft wird jedoch eine wässrige Lösung oder Dispersion verwendet.

Falls für bestimmte Anwendungen gewünscht, wird zusammen mit dem Verankerungsmittel ein zusätzliches wasserabstossendes Harz wie Paraffin, Montanwachs, Carnaubawachs und/oder geeignete Verdickungsmittel, wie Celluloseether oder Stärke, auf die Bahn aufgetragen.

Der Überzug aus dem Verankerungsmittel enthält beispielsweise einen gegebenenfalls transparenten, organischen Farbstoff, der der Schlauchhülle eine entsprechende Farbe verleiht.

Die Bahn kann nach dem Aufbringen des Verankerungsmittels und nach dem Trocknen sowie vor dem Verkleben mit Beschriftungen oder dekorativen Mustern bedruckt werden, wobei neben dem bei der Herstellung von nahtlosen Wursthüllen üblichen Druckverfahren noch weitere Druckmöglichkeiten sich anbieten, da im vorliegenden Fall nicht der Schlauch, sondern die flache Bahn vor der Schlauchformung bedruckt werden kann.

Neben dem Verankerungsmittel enthält die Schicht auf der Schlauchhülle im Bereich der Verbindungsnaht gegebenenfalls Pigmente, einen Weichmacher für das Verankerungsmittel und/oder ein Härtungsmittel für das Verankerungsmittel. Das Verankerungsmittel und der Weichmacher werden in einem geeigneten flüssigen Lösungs- bzw. Dispergiermittel aufgenommen, das vorteilhafterweise bei einer Temperatur verdampft werden kann, bei der gleichzeitig zumindest eine Vorhärtung des Harzes eintreten kann.

Als Beispiele für das als Verankerungsmittel bevorzugte hitzehärtbare kationische Harz sind zu nennen: Harnstoff-Formaldehyd-, Melamin-Formaldehyd- und Phenol-Formaldehyd-Harze. Als bevorzugter Weichmacher für diese hitzehärtbaren Harze dienen weiche, nichthärtbare Harze vom Alkyd-Typ oder auch Dibutylphthalat, Trikresylphosphate oder Dibutylsebacat.

Als Härter für das hitzehärtbare Harz kann beispielsweise Ammoniumthiocyanat, Toluolsulfonsäure, Maleinsäure oder Milchsäure eingesetzt werden. Diese Verbindungen verhalten sich wie Katalysatoren bei der Härtung der hitzehärtbaren Harze. In bevorzugter Ausführung erfolgt die Härtung in alkalischer wässriger Lösung.

Besonders bevorzugte hitzehärtbare Harze sind in der US-A 3 378 379 beschrieben. Es sind Kondensationsprodukte von Polyamidpolyamin oder aliphatischen Polyaminen oder von Polyamiden mit bifunktionellen Halohydrinen oder deren Derivaten wie z.B. Epichlorhydrin, wie sie auch aus den US-A 2 573 956 und US-A 2 926 154 und GB-A 865 727 und GB-A 908 205 bekannt sind. Ein besonders geeignetes Harz ist beispielsweise das Reaktionsprodukt aus aliphatischen 2,6-Polyamid, Diethylentriamin und Epichlorhydrin.

Es ist bekannt, dass die Räucherfärbung durch Reaktion von Phenolen und Carboxylverbindungen mit Proteinen zustande kommt, wobei ihre Intensität und Haltbarkeit besonders vom Wassergehalt der Hülle, vom pH-Wert des Substrats sowie von Dauer und Höhe der Erhitzung abhängen. Die Hauptbestandteil im Rauch darstellenden flüchtigen Carbonsäuren, die für die Färbung besonders massgeblich sind, müssen deshalb die Schlauchhülle und ihre Überzugsschichten passieren können.

Wie bereits oben beschrieben, hat sich überraschenderweise gezeigt, dass das Verankerungsmittel aus dem hitzegehärteten kationischen Harz eine ausreichend rauchdurchlässige Schicht bildet. Diese Eigenschaft ist von besonderer Bedeutung, da die Schlauchhülle für zu räuchernde Lebensmittel, z.B. als künstliche Wursthaut für zu räuchernde Brühwürste, vorgesehen ist. Bei zu geringer Rauchdurchlässigkeit würde sich der typische rötlichbraune Farbton des geräucherten Wurstbräts nicht einstellen.

Sofern jedoch die Schicht aus dem Verankerungsmittel aus einem nicht ausreichend rauchdurchlässigen Material besteht, so muss diese Schicht mit einer rauchdurchlässigen Struktur versehen werden.

Hierzu wird das Verankerungsmittel beispielsweise nicht vollflächig auf die Bahn bzw. den Folienstreifen aufgebracht, sondern mit Unterbrechungen oder Ausnehmungen. Das Verankerungsmittel kann auch in Streifen, spiralförmig oder punktförmig gerastert aufgetragen werden, z.B. mit einer profilierten Walze, die dieser Schicht eine Struktur verleiht. Die Auftragswalze kann auch eine Textilstruktur oder eine Bürstenoberfläche aufweisen. Es ist auch möglich, das Verankerungsmittel mit mehreren Düsen, die sich quer zur Bahn hin- und herbewegen, auf die bewegte Bahn auszupressen, wobei ein wellenförmiges Streifenmuster dieser Schicht erzeugt wird.

Besonders vorteilhaft ist der Antrag einer das Verankerungsmittel enthaltenden Dispersion oder Lösung in einer regelmässigen Punkt- oder Linienrasterstruktur, im Rotationssiebdruck oder Tiefdruck, der mit einer Geschwindigkeit bis zu etwa 100 m/Min. durchgeführt werden kann. Geeignete Durchlässe lassen sich auch auf chemischem Wege, z.B. durch partielles Ablösen des Verankerungsmittels vor dem Bilden der Klebenaht, erzeugen.

Es kann ferner eine extrahierbare pulverförmige Substanz, beispielsweise Stärke, Polystyrol, Zucker oder ein Salz in die Schicht des Verankerungsmittels eingearbeitet werden, welche nach dem Auftragen des Verankerungsmittels und nach dem Entfernen des Dispersions- oder Lösungsmittels herausgelöst wird. Es ist auch möglich, dem Verankerungsmittel einen rauchdurchlässigen Zusatzstoff beizumischen, z.B. eine poröse Substanz oder organische Pigmente mit hoher Rauch- bzw. Gasdurchlässigkeit. Auch mit dem Zusatz von Gasen oder in der Hitze gasbildender Mittel in Form kleiner Blasen, die gegebenenfalls in der Hitze ausgedehnt werden, lässt sich die Gas- und Rauchdurchlässigkeit verbessern, wobei diese Schicht z.B. aufgesprüht wird.

Wie sich überraschenderweise gezeigt hat, sind die beschriebenen Ausführungsformen der Schlauchhülle mit guter Rauchdurchlässigkeit der Schicht aus Verankerungsmittel ausreichend stabil und mechanisch und thermisch belastbar.

Der nach der Erfindung vorgesehene Klebstoff ist ein kationisches Harz, das zunächst in wasserlöslicher Form in einer Lösung oder Dispersion, zweckmässigerweise in einer Nassschichtdicke im Bereich von etwa 2 bis 20 μm, insbesondere 3 bis 10 μm, auf die miteinander zu verbindenden Randzonen der Cellulosebahn unmittelbar vor oder während der Schlauchformung aufgebracht wird. Wird ein Folienstreifen zur Verbindung der Randzonen der Cellulosebahn verwendet, so wird die Lösung oder Dispersion auf den Folienstreifen und/oder auf die Randzonen der Cellulosebahn aufgebracht. Der Klebstoffauftrag auf den Folienstreifen erfolgt beidseitig, wenn der Folienstreifen in der Überlappung zwischen den Randzonen der Cellulosebahn angeordnet wird.

Es wird ein organisches Lösungs- bzw. Dispersionsmittel oder ein Gemisch für den Klebstoff verwendet, vorzugsweise wird der Klebstoff in 5 bis 20-gew.-%iger, insbesondere 10 bis 15-gew.-%iger wässriger Lösung aufgebracht. Der Einfachheit halber wird im folgenden nur der Ausdruck «Klebstofflösung» gebraucht.

Die Klebstofflösung kann einen Farbstoff enthalten, wie z.B. einen Pigmentfarbstoff (®Novofil, Herst. Hoechst) sowie gegebenenfalls ein Polyol wie Glycerin und/oder ein Dispergiermittel für den Farbstoff. Die farblich gekennzeichnete Nahtzone dient beispielsweise zur Identifizierung des Kalibers der Schlauchhülle bei der Weiterverarbeitung.

In bevorzugter Ausführung erfolgt die Härtung der Harze im alkalischen Bereich, z.B. durch Zusatz von konzentrierter Ammoniaklösung, und bei Raumtemperatur.

Die Herstellung der als Klebstoff geeigneten kationischen Harze ist in der US-A 3 378 379 beschrieben. Die Klebstoffe sind Kondensationsprodukte von aliphatischen Polyaminen oder von Polyamiden, insbesondere von Polyamidpolyamin mit bifunktionellen Halohydrinen oder deren Derivaten wie z.B. Epichlorhydrin, wie sie beispielsweise auch in den US-A 2 926 154 und US-A 2 573 956 oder in den GB-A 865 727 und GB-A 908 205 beschrieben sind. Ein besonders geeignetes Harz ist das Reaktionsprodukt aus aliphatischem 2,6-Polyamid, Diethylentriamin und Epichlorhydrin.

Als Polyamine kommen einfache Alkylendiamine in Betracht oder Polyalkylenpolyamine, wie beispielsweise Diethylentriamin, Triethylentetramin, Tetraethylenpentamin und die entsprechenden Polypropylenpolyamine, und Polybutylenpolyamine wie Dibutylentriamin. Die Polyamine werden zur Herstellung der entsprechenden Chlorhydrinharze mit mehr als einem Mol Epichlorhydrin je Mol Polyamin umgesetzt. Im allgemeinen werden von 1,5 bis 4,0 Mol Epichlorhydrin meist 2 bis 3 Mol angewendet. Die Umsetzung erfolgt in wässriger Lösung, bei mässig erhöhter Temperatur (etwa 50°C), bis der gewünschte Viskositätsgrad erreicht ist. Vorzugsweise verwendet man Umsetzungsprodukte von Epichlorhydrin mit Dipropylentriamin oder mit Bis(3-Aminopropyl)methylamin, wobei man 2,8 bis 3,8 Mol Epichlorhydrin mit 1 Mol Polyamin umsetzt.

Die Polyamid-Polyamine sind Kondensationsprodukte einer gesättigten, aliphatischen, zweibasischen Säure, die 3 bis 8 Kohlenstoffatome im Molekül aufweist mit einem der oben genannten Polyamine, das mindestens eine sekundäre und zwei primäre Amingruppen aufweist, wie beispielsweise die oben genannten Polyalkylenpolyamine. Es können auch Gemische dieser zweibasischen Säuren verwendet werden.

Die Gesamtbreite des Auftrags der Klebstofflösung hängt ab von den gewünschten Festigkeitswerten und dem Schlauchhüllenumfang sowie von der Nassschichtdicke der aufgebrachten Klebstofflösung. Gewöhnlich wird die Gesamtbreite des Klebstoffauftrags zwischen etwa 1 bis 15, insbesondere 2 bis 3 mm liegen und beträgt nur wenige Prozent des späteren Schlauchhüllenumfangs. Bei Verwendung eines Folienstreifens zur überlappenden Verbindung einer aus den Randzonen gebildeten Stossnaht ist ein entsprechend doppelt so breiter Auftrag der Klebstofflösung erforderlich.

Es ist selbstverständlich, dass im Gegensatz zu der gegebenenfalls durchgeführten Beschichtung der Bahn mit dem Verankerungsmittel der Auftrag der Klebstofflösung nicht über die gesamte Fläche der Bahn erfolgen kann, sondern nur im gewünschten Verklebungsbereich, d.h. entlang der beiden längsaxial sich erstreckenden Ränder und/oder auf der Oberfläche des Folienstreifens.

Die mit der Klebstofflösung zu versehende Oberfläche der Cellulosebahn befindet sich beim Auftrag der Klebstofflösung im getrockneten oder im wieder angefeuchteten Zustand und weist gegebenenfalls bereits die oben beschriebene Schicht eines Verankerungsmittels auf.

Nach dem Auftrag der Klebstofflösung, z.B. mit Walzen oder Sprühdüsen, wird die Verbindungsnaht durch Überlappen der Randzonen der Cellulosebahn bzw. durch Überlappen des Folienstreifens mit den Randzonen der Cellulosebahn hergestellt. Das Lösungs- bzw. Dispersionsmittel kann durch vorsichtiges Erwärmen mit Heissluft oder Infrarotstrahlern entfernt werden; das Erwärmen wird jedoch zweckmässigerweise nicht angewendet, da es zu einer Versprödung des Cellulosematerials führen kann. Vorzugsweise erfolgt die Entfernung des Lösungsbzw. Dispersionsmittels und auch die Härtung des Harzes während der anschliessenden Lagerung bei Raumtemperatur über einen Zeitraum von etwa 1 bis 3 Tagen. Durch die während der Lagerung erfolgende Härtung des den Klebstoff bildenden Harzes verbinden sich die überlappenden Randzonen der Cellulosebahn miteinander, bzw. der Folienstreifen mit den Randzonen. Eine Schichtdicke für den Klebstoff entsprechend einem Flächengewicht im Bereich von 0,2 bis 10 $g/m^2$ ist im allgemeinen ausreichend. Die übliche Dicke der Klebstoffschicht entspricht einem Flächengewicht von etwa 0,3 bis 3 $g/m^2$ bei einer Gesamtbreite der Klebstoffschicht von etwa 1 bis 15 mm. Nach der Lagerung hat die Schlauchhülle einen Feuchtigkeitsgehalt von 4 bis 15, insbesondere 7 bis 10 Gew.%.

Es ist an sich überraschend, dass während des Überlappens der Randzonen miteinander oder mit dem Folienstreifen kein Druck oder Hitze auf die Nahtstelle ausgeübt werden muss. Die Kombination aus Klebstoff und Bahnmaterial sowie gegebenenfalls Verankerungsmaterial ermöglicht eine äusserst schnelle Haftung im Klebebereich, so dass der gebildete Schlauch bereits nach 1 bis 3 sec nach der Überlappung aufgewickelt werden kann.

Die Klebstoffschicht und/oder die Verankerungsmittelschicht können noch weitere Zusätze enthalten, z.B. Mittel, um diese Schicht oder die Schlauchhülle vor dem Befall durch Mikroorganismen zu schützen, Netzmittel, Weichmacher wie Glycerin, Füllstoffe wie Kaolin, Glaskugeln, Kreide, Quarzmehl, Mikrodolomit, Schwerspat, feinkörnigen Sand, Zinkoxid und Pigmente sowie organische und anorganische Farbstoffe, z.B. in Pulver- oder Schuppenform.

Ferner zeigt die Schlauchhülle den Vorteil, dass der Klebstoff gegebenenfalls in Kombination mit einem der obengenannten Verankerungsmittel beim Verkleben von Bahnen unter Ausbildung von Schlauchhüllen eine ausreichend feste Naht bildet. Besonders bei der Herstellung von Würsten, bei die der Naht beim Brühen der Wurst längere Zeit heissem Wasser ausgesetzt ist, sowie beim Raffen, Füllen, Abdrehen, Abbinden, Klippen und dergleichen, wenn die Naht hoher mechanischer Belastung und Spannungen standhalten muss und Dimensionsänderungen eintreten, hat sich gezeigt, dass diese Kombination aus Cellulosebahn und Klebstoff sowie gegebenenfalls Verankerungsmitteln besonders vorteilhaft ist.

Wie sich zeigte, liegt die Reissfestigkeit von Klebestellen bei gleichen Werten oder sogar über den Werten für die Reissfestigkeit des Cellulosematerials in Querrichtung.

Zur Verpackung von Fleischwaren in Form von Wurstmasse werden bekanntlich geraffte, nahtlose Schlauchhüllen verwendet, die beim Einpressen der Wurstmasse fortlaufend entfältelt werden. Diese gerafften Hüllen, in der Fachsprache auch als Raupen oder Hohlstäbe bezeichnet, werden bisher aus langen, nahtlosen Schläuchen hergestellt, die man in Richtung ihrer Längsachse fördert und gegen eine Gegenkraft rafft, wobei die Länge der gerafften Hülle gewöhnlich nur noch 1 bis 3% der Ursprungslänge beträgt.

Auch die erfindungsgemässe Schlauchhülle kann gerafft werden.

Dies ist besonders überraschend, da wegen der Verdickung im Bereich der Klebenaht, insbesondere wenn ein beide Ränder überdeckender Folienstreifen verwendet wird, eigentlich Schwierigkeiten beim Raffen zu erwarten sind. Die Schlauchhülle wird beispielsweise mit dem aus den US-A 3 988 804 und US-A 4 185 358 bekannten Verfahren bzw. der dort beschriebenen Vorrichtung gerafft.

In bevorzugter Ausführungsform zeigt die geraffte Schlauchhülle eine spiralförmige Verdrehung und folglich eine Verdrillung der relativ dikken Nahtzone um die Längsachse der Hülle. Dies geschieht beispielsweise mit an sich bekannten Raffvorrichtungen, wie sie z.B. in den US-A 2 819 488, US-A 3 619 854, US-A 3 594 857 und US-A 3 766 603 beschrieben sind. Die Anzahl der Windungen pro 10 m Schlauchlänge liegt dann zwischen 0,5 und 10.

Die gerafften Schläuche werden mit einem Wurstbrät vom Brühwursttyp gefüllt (ca. 20 m/min), mechanisch abgedreht, gebunden oder geklippt, geräuchert, bei 70 bis 85°C gebrüht und mit Wasser abgekühlt. Man erhält Würste mit gleichmässiger Form und schälbarer, an der Wurstmasse eng anliegender Hülle. Würste vom Brühwursttyp sind beispielsweise Jagdwurst, Bierschinken, Fleischwurst, Gelbwurst, Mortadella und Lyoner.

Sofern die Schlauchhülle für empfindliche Nahrungsmittel vorgesehen ist oder mit einem hohen Wassergehalt gelagert werden soll, wird die Bahn oder die Schlauchhülle sterilisiert, wobei man z.B. Hitze- oder Ozonbehandlung, Hochfrequenzbestrahlung oder Behandlung mit chemischen Mitteln wie Propylenglykol (GB-A 1 584 435) oder Sorbatlösung (US-A 3 617 312) anwendet.

Neben bereits genannten Vorteilen ist noch darauf hinzuweisen, dass die Schlauchhüllen der Erfindung sich mit höherer Geschwindigkeit als bisher produzieren lassen: Bei der Herstellung von Bahnen anstelle von nahtlosen Schläuchen aus regenerierter Cellulose nach dem Viskoseverfahren kann der Spinnprozess rascher durchgeführt werden, ebenso das Beschichten der Bahnen und das Bedrucken. Die Hülle zeigt ferner eine gleichmässige einheitliche koagulierte und regenerierte Schicht aus Cellulose.

Neben Flexodruck ist auch hochwertiger Tiefdruck möglich. Ferner lässt sich der Zuschnitt bzw. die Bahn mit einem Rundumdruck oder als Vorder- und Rückseitendruck bedrucken.

Bei der Verwendung als Wursthülle tritt keine Geschmacksbeeinflussung der Wurstmasse ein. Die Wursthülle und Klebenaht zeigen grosse Festigkeit gegenüber Dehnungsbelastung und Volumenbeständigkeit beim Füllen mit Wurstmasse, Hantieren und Verarbeiten. Durch den beim Füllen auftretenden Druck und durch die beim Brühen und Abkühlen auftretenden Quell- und Schrumpfkräfte tritt überraschenderweise keine Schädigung der Naht ein, obwohl die Schicht aus dem Verankerungsmittel gegebenenfalls poröse Struktur aufweist. Die Wursthülle ist auch bei tiefen Temperaturen lagerfähig und lässt sich gut aufschneiden, wobei der Folienstreifen als Aufreissband dienen kann. Der besondere Vorteil liegt darin, dass die Schlauchhülle rauchdurchlässig ist, trotz der Klebstoffschicht sogar im Nahtbereich. Die beispielsweise mit Brühwurstbrät gefüllten Schlauchhüllen zeigen nach dem Räuchern eine gleichmässige, typisch rötlichbraune Räucherfarbe.

Die Erfindung wird anhand der folgenden Beispiele näher erläutert.

Beispiel 1

Viskose wird durch einen Spalt in ein saures Koagulationsbad gepresst. Danach wird die Bahn aus Cellulosehydrat-Gel durch ein Weichmacherbad geführt, das aus einer 9-gew.-%igen wässrigen Glycerinlösung besteht. Eine gesonderte Querverstreckung der Bahn während der Herstellung wird nicht vorgenommen.

Nach dem Trocknen bei 90 bis maximal 110°C zeigt die erhaltene Bahn aus regenerierter Cellulose ein Flächengewicht von 40 g/m², einen Wassergehalt von ca. 8 Gew.% und einen Glyceringehalt von ca. 20 Gew.%. Der Wassergehalt wird gegebenenfalls durch Wiederbefeuchten eingestellt. Die Wasserdampfdurchlässigkeit der erhaltenen Cellulosebahn beträgt ca. 700 g/m²·24 h (DIN 53 122, gravimetrisch ermittelt), der Quellwert nach 24 h bei Raumtemperatur etwa 140%. Der Quellwert ist die Menge an Wasser, in Gewichtsprozent bezogen auf die Cellulosebahn, die vom Bahnmaterial aufgenommen werden kann. Der Quellwert wird nach einer Vorschrift ermittelt, die in «Färberei und textiltechnische Untersuchungen», (Seite 400), H. Agster, Springer-Verlag, Berlin 1956, beschrieben ist. Das Bahnmaterial zeigt ferner eine Reissfestigkeit von 75 bis 85 N/mm² in Querrichtung.

Die Cellulosebahn wird in 60 mm breite Bänder geschnitten. Jeder bandförmige Zuschnitt wird entlang eines seiner beiden Ränder mit einer 12-gew.-%igen wässrigen Lösung (pH 7,5, eingestellt mit konz. Ammoniaklösung) eines wasserlöslichen kationischen Harzes streifenförmig in Bandlängsrichtung beschichtet. Das Harz ist ein Reaktionsprodukt aus Ethylendiamin, Adipinsäure, Diethylentriamin und Epichlorhydrin und ist als 12- und 20-gew.-%ige wässrige Lösung unter dem Namen ®Resamin HW 601 (Hersteller Cassella) im Handel.

Hierzu wird die Lösung mittels einer rotierenden, ca. 2 mm breiten Antragswalze aus einer Vorratswanne auf das laufende Folienband übertragen und nimmt dort bei einer Nassschichtdicke von 10 bis 12 µm eine Breite von 2 bis 3 mm ein. Das in Randnähe beschichtete Band wird mit Hilfe äusserlich und innerlich angreifender Formhilfen derart zu einem Schlauch mit einem Durchmesser von 17 mm geformt, dass die mit der Lösung beschichtete Kante und die unbeschichtete Kante sich um ca. 5 mm überlappen. Die jeweiligen kantennahen Bereiche bilden eine in Längsrichtung verlaufende, überlappte Klebenaht, wobei eine Klebstoffschicht entsprechend einem Flächengewicht von 1 bis 2 g/m² resultiert. Der gebildete Schlauch wird ca. 1 bis 2 sec nach Bildung der Überlappungsnaht flachgelegt und aufgerollt.

Nach ca. 3tägiger Lagerung bei Raumtemperatur besitzt die Klebestelle eine Heisswasserbeständigkeit von mehreren Stunden, wenn quer zur Naht geschnittene Prüflinge von 15 mm Breite und 50 mm Einspannlänge in 80°C heisses Wasser hängend eingetaucht und am unteren Ende mit 500 g belastet werden.

Im Normklima (23°C, 50% rel. Feuchte) konditionierte Schlauchhüllen zeigen eine Reissfestigkeit in Querrichtung von 50 N/mm² und einen Platzdruck von mehr als 1 bar; für 30 min in Wasser (20°C) eingelegte Schläuche weisen einen Platzdruck von 0,35 bis 0,45 bar auf. Diese Werte sind für kleinkalibrige Wursthüllen ausreichend.

Die so hergestellten Schlauchhüllen werden mit der aus der US-A 4 185 358 bekannten Vorrichtung gerafft und als Hüllen für Wurstgut verwendet. Hierzu werden die Schlauchhüllen mit typischen Wurstfüllungen, z.B. nach Wiener oder Frankfurter Art, gestopft, portioniert und unter bekannten Bedingungen geräuchert und gebrüht. Man erhält Brühwürstchen, die eine gleichmässige typische rotbraune Räucherfarbe aufweisen; die Klebenaht hat den bei der Verarbeitung auftretenden Kräften standgehalten.

Bei Bedarf kann die Schlauchhülle vom Wurstgut abgezogen werden; es verbleiben hüllenlose Würstchen in gut ausgebildeter Eigenhaut.

Beispiel 2

Man wiederholt Beispiel 1, verwendet aber als Klebstoff für die Klebenaht eine 12-gew.-%ige wässrige Lösung (pH 9) eines kationischen Polyamidharzes der Fa. Hercules mit der Bezeichnung ®Kymene 557 H. Die Lösung wird aus einem unter Druck stehenden Vorratsgefäss durch einen dünnen Schlauch zu einer Beschichtungsdüse gefördert, deren Öffnung einen Durchmesser von ca. 0,4 mm besitzt und die im Bereich des Formkopfes so positioniert ist, dass die Klebstofflösung unmittelbar in den Überlappungsbereich des zum Schlauch gelegten Cellulosebandes entlassen wird. Durch Wahl eines geeigneten Druckes lässt sich eine ca. 1 bis 3 mm breite Spur der Klebstofflösung im Überlappungsbereich kontinuierlich erzeugen, mit der die Kantenbereiche des Bandes überlappend verbunden werden. Der erhaltene Schlauch wird sofort flachgelegt und aufgerollt.

Nach 2 bis 3 Tagen Lagerung bei Raumtemperatur hat sich eine Heisswasserbeständigkeit von mehreren Stunden entwickelt, wenn quer zur Naht geschnittene Prüflinge von 15 mm Breite und 50 mm Einspannlänge in 80°C heisses Wasser hängend eingetaucht und am unteren Ende mit 600 g belastet werden. Die so hergestellten Schlauchhüllen eignen sich vorzüglich als rauchdurchlässige und reissfeste künstliche Wursthäute, insbesondere für Wurstbrät der im Beispiel 1 genannten Art.

Beispiel 3

Eine Bahn aus langfaserigem Hanfpapier mit einer Flachbreite von 235 mm und einem Flächengewicht von 21 g/m² wird beidseitig mit Viskose beschichtet. Die Spaltbreite beträgt beispielsweise 0,8 mm, die Bahngeschwindigkeit 5 m/min.

Auf die mit Viskose versehene Bahn wird danach eine zur Fällung und Regenerierung geeignete Flüssigkeit aufgebracht. Die Bahnbreite wird durch an den beiden Bahnkanten angreifende Halteelemente konstant gehalten, so dass die gewöhnlich beim Regenerieren auftretende Schrumpfung in Querrichtung verhindert wird. Die faserverstärkte Bahn aus Cellulosehydrat-Gel durchläuft anschliessend Wasch- und Entschwefelungsbäder. Die Bahn aus Cellulosehydrat-Gel hat nun eine Breite von 210 mm.

Die faserverstärkte Bahn aus Cellulosehydrat-Gel wird durch eine Wanne gezogen, die eine 3-gew.-%ige wässrige Lösung des in Beispiel 1 verwendeten kationischen Harzes enthält. Danach passiert die Bahn ein Bad mit 15-gew.-%igen wässriger Glycerinlösung.

Es folgt eine Vortrocknung der Bahn, bei der der Wassergehalt der Bahn auf 80 bis 150 Gew.% erniedrigt wird. Danach werden die Bahnkanten von Halteelementen erfasst, wobei die Bahn auf eine Breite von 252 bis 262 mm in Querrichtung verdehnt wird. Die Bahn wird – während sie weiterhin auf diese Breite gehalten wird – getrocknet, vorzugsweise bei etwa 80 bis 110°C. Die Restfeuchte der aufgewickelten Bahn beträgt etwa 14 Gew.%, sie zeigt eine Reissfestigkeit in Längsrichtung von 52 N/mm², in Querrichtung 58 N/mm² und eine Reissdehnung von etwa 17,5% in beiden Richtungen. Ihr Flächengewicht ist etwa 100 g/m², ihr Glyceringehalt etwa 21%. Auf beiden Oberflächen sind Schichten aus dem gehärteten, wasserunlöslichen Harz mit jeweils einem Flächengewicht von etwa 0,5 bis 1 g/m² vorhanden. Die Wasserdampfdurchlässigkeit beträgt 650 g/m²·24 h.

Die maximale Aufnahme von flüssigem Wasser bei Raumtemperatur nach 24 h (Quellwert) beträgt 140%.

Die Bahn aus faserverstärkter Regeneratcellulose wird in 170 mm breite Bänder geschnitten. Ein solches Band wird durch eine Formvorrichtung geführt, wobei ein Schlauch mit einem Durchmesser von 50 mm entsteht und die beiden Ränder des Bandes sich um 13 mm überlappen. In diese Überlappung ragt die Spitze einer feinen Düse, durch die mittels Druck eine 12%ige wässrige Lösung des in Beispiel 1 genannten Harzes, die mit konz. Ammoniak auf einen pH-Wert von 7,5 eingestellt wurde, gespritzt wird. Die nun im Überlappungsbereich vorhandene ca. 10 mm breite Schicht der Klebstofflösung mit einer Nassschichtdicke von ca. 10 μm verbindet die randnahen Bereiche des Bandes miteinander. Der kontinuierlich gebildete und mit einer in Längsrichtung verlaufenden Klebenaht versehene Schlauch wird sofort flachgelegt und auf gerollt, ohne dass die sich überlappenden Randzonen verrutschen.

Nach 2tägiger Lagerung im Normklima besitzt die Klebenaht eine Heisswasserfestigkeit von mehr als einer Stunde, wenn quer zur Naht geschnittene Probestreifen von 50 mm Einspannlänge und 15 mm Breite in 80°C heisses Wasser senkrecht eingehängt und mit einem Gewicht von 2000 g belastet werden. Nach 30minütiger Wässerung im Wasserbad zeigt der Schlauch einen Platzdruck von 1,2 bar.

Quer zur Naht geschnittene, klimatisierte Proben zeigen im Zugversuch eine Reissfestigkeit von 57 bis 58 N/mm² in Querrichtung, erreichen also auch im Bereich der Naht die ursprüngliche Materialfestigkeit.

Die erhaltenen Schläuche werden z.B. mit der aus der US-A 4 185 358 bekannten Raffvorrichtung gerafft.

Abschnitte der in den Beispielen hergestellten Schläuche werden mit einer üblichen Wurstabfüllvorrichtung mit einem Wurstbrät für Brühwürste (z.B. Lyoner oder Jagdwurst) bei einem Fülldruck von 0,3 bar gefüllt und durch Abbinden oder Klippen verschlossen. Danach werden die erhaltenen Würste wie üblich geräuchert, z.B. 10 bis 60 Minuten im Feuchtrauch bei 70 bis 80°C, und für weitere 50 Minuten in Wasser von 80 bis 82°C gebrüht, danach gekühlt und im Kühlraum gelagert. Im Falle von Salamifüllungen werden die Würste geräuchert und getrocknet.

Nach dem Anschneiden können die Wursthüllen mühelos abgezogen werden. Ferner zeigen die Würste auch im Nahtbereich eine gleichmässige Räucherfärbung. Die Klebenaht ist stabil gegenüber den mechanischen und thermischen Belastungen während der Verarbeitung und Lagerung.

Die Erfindung wird ferner durch die Fig. 1 bis 7 näher erläutert.

Fig. 1 zeigt in das Beispiel 3 beschriebene Verfahren zur Herstellung der faserverstärkten Bahn aus regenerierter Cellulose mit besonders hoher Reissfestigkeit.

Fig. 2 zeigt eine Möglichkeit zur Herstellung eines Schlauches aus einer Bahn unter Verwendung eines Stützelementes, einer Führungshülse und eines Folienstreifens.

Fig. 3 zeigt eine weitere Alternative zur Herstellung eines Schlauches aus einer Bahn unter Verwendung einer Formschulter und eines Folienstreifens.

Fig. 4 zeigt eine weitere Ausbildung der Schlauchherstellung unter Bildung einer Überlappungsnaht mit einer Formschablone.

Fig. 5 zeigt eine Möglichkeit der Schlauchbildung mit Antrag der Klebstofflösung durch eine Düse in die Überlappungsnaht.

Fig. 6 zeigt die Verbindungsnaht des Schlauchs mit sich überlappenden Randzonen des Bahnmaterials.

Fig. 7 zeigt die Verbindungsnaht des Schlauchs mit einem Folienstreifen.

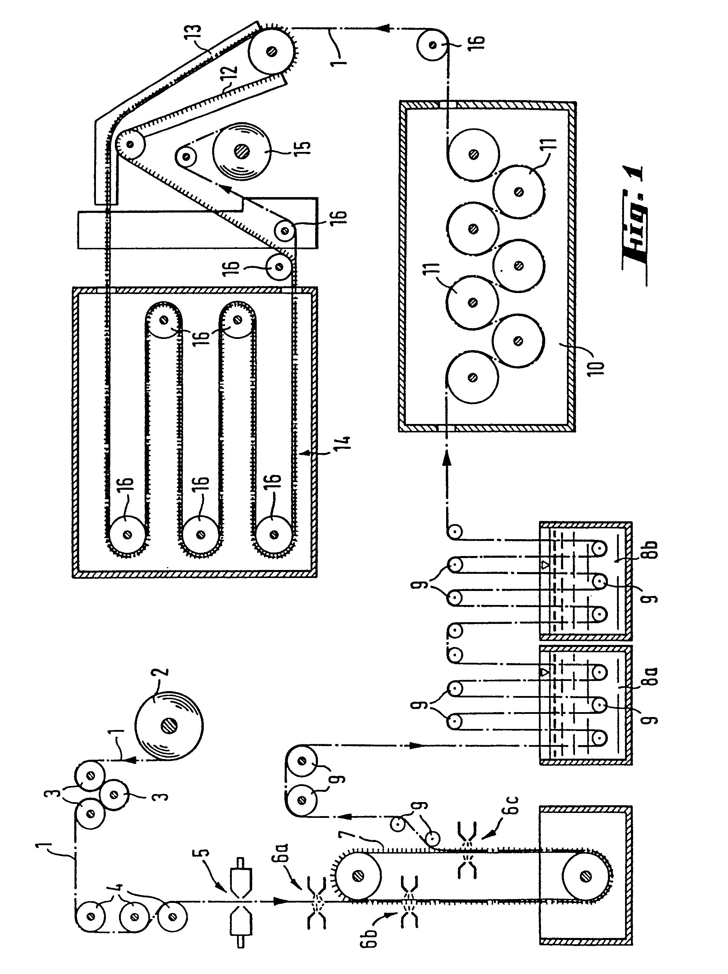

In Fig. 1 wird die Bahn 1 von einer Rolle 2 abgewickelt und nach dem Durchlaufen von Zugwalzen 3 und die Bahnkanten steuernden Walzen 4 mit einem Flachbahngiesser 5 beidseitig mit Viskose beschichtet. Aus Düsen 6a, 6b und 6c wird die zur Fällung und Regenerierung vorgesehene Flüssigkeit auf die mit Viskose imprägnierte Bahn 1 aufgesprüht. Die Bahnbreite wird während des Regenerierens durch die an beiden Bahnkanten angreifenden Nadelketten 7 konstant gehalten, so dass die Schrumpfung der Bahn in Querrichtung verhindert wird. Die faserverstärkte Bahn aus Cellulosehydrat-Gel durchläuft über Walzen die nur schematisch gezeigte Wanne 8a, die mehrere Wasch-, Entschwefelungs- und Weichmachungsbäder darstellen soll. In der Wanne 8b erfolgt die Beschichtung der Bahn mit einer wässrigen Lösung eines Verankerungsmittels. Eine Vortrocknung der Bahn erfolgt im Trockenteil 10, in dem die Bahn über Trocknungswalzen 11 läuft. Danach werden die Bahnkanten von Nadelkluppenketten 12 erfasst und die Bahn durch einen Spannrahmen 13 und anschliessend durch mehrere Etagen eines Trockenfeldes 14 geführt. Im Spannrahmen 13 wird die Bahn in Querrichtung verdehnt und unter Aufrechterhalten dieser Bahnbreite getrocknet. Die getrocknete Bahn wird auf der Walze 15 aufgewickelt oder kontinuierlich unter Schlauchbildung weiterverarbeitet. Mit 16 sind weitere meist zur Umlenkung der Bahn und/oder der Kluppenketten dienende Walzen bezeichnet.

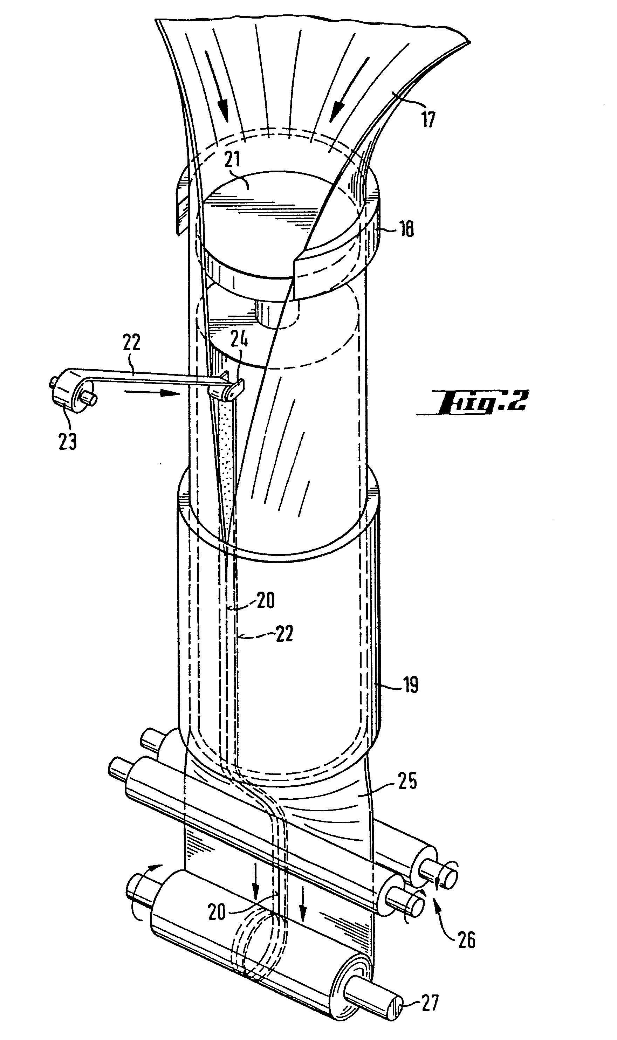

In der Fig. 2 wird die Bahn 17 aus Cellulose durch ein Ringsegment 18 geführt und zu einem Schlauch geformt, wobei sich die beiden Ränder in der Führungshülse 19 zu einer Stossnaht 20 nähern. Das Ringsegment 18 und die Führungshülse 19 dienen zur äusseren Unterstützung der Schlauchbildung, während das im Schlauchinneren vorhandene zylindrische Stützelement 21 den Schlauch von Innen abstützt. Ein Folienstreifen 22, bestehend aus dem gleichen Material wie die Bahn, wird von der Rolle 23 abgewickelt und über eine ösenförmige Halterung 24 in das Innere des Schlauches geführt, wobei sich die Stossnaht 20 etwa in der Mitte des Folienstreifens 22 befindet. Auf der Oberfläche des Folienstreifens befindet sich zur Verbindung der beiden Ränder der Bahn eine wässrige Lösung des Klebstoffs. Die wässrige Lösung des Klebstoffs wird z.B. mit einer nicht dargestellten Streichrakel, Düse oder Antragswalze kontinuierlich auf den Folienstreifen 22 aufgebracht.

Eine Schicht der wässrigen Klebstofflösung befindet sich gegebenenfalls auch auf der die Innenseite des Schlauches bildenden Bahnoberfläche. Der Schlauch 25 wird durch das Walzenpaar 26 abgezogen und mit der Rolle 27 aufgewickelt.

Anstelle des Stützelements 21 im Inneren des gebildeten Schlauches kann sich auch Füllgut z.B. Wurstbrät in dem Schlauch befinden, das aus einem Füllrohr einer Füllvorrichtung in dem Masse austritt, wie der Schlauch fortbewegt wird. Vorzugsweise mündet das Füllrohr koaxial in das Schlauchinnere ein. Ferner ist es auch möglich, das Stützelement 21 als Füllrohr auszubilden. In diesen Fällen erfolgt die Schlauchbildung in einem Arbeitsgang mit der Herstellung der Würste. Diese Verfahrensvariante funktioniert nur bei solchen Wurstsorten, z.B. Mettwurst, die nicht unmittelbar nach der Füllung gebrüht werden.

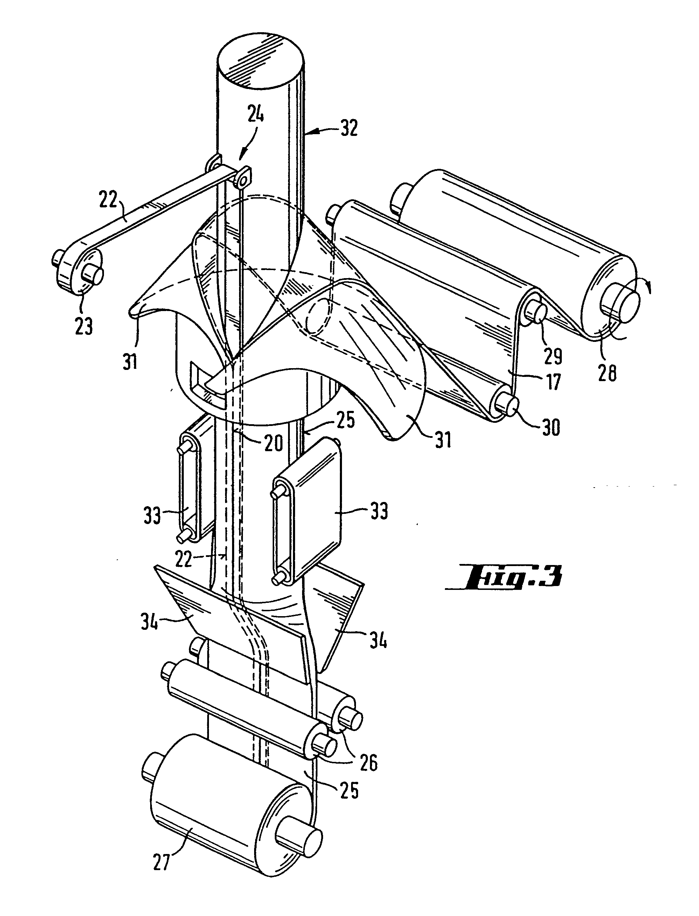

In einer in Fig. 3 gezeigten Alternative wird die Bahn 17 aus Cellulose von der Rolle 28 abgezogen und über Leitrollen 29 und 30 zu einer Formschulter 31 geführt, wo die Schlauchformung stattfindet. Die beiden Ränder der Bahn 17 werden unter Bildung einer Stossnaht 20 einander genähert. Das zylindrische Stützelement 32 befindet sich im Inneren des Schlauches 25 und zeigt einen Aussendurchmesser, der dem Innendurchmesser des gebildeten Schlauches 25 entspricht.

Ein Folienstreifen 22 aus dem Bahnmaterial wird von der Rolle 23 abgewickelt und über ein ösenförmiges Führungselement 24 in das Innere des Schlauches 25 geführt, wobei sich die Stossnaht 20 in der Mitte des Folienstreifens 22 befindet. Der Folienstreifen 22 ist mit einer wässrigen Klebstofflösung beschichtet. Er hat beispielsweise eine Breite von 10 mm, so dass die Randzonen der Bahn jeweils um etwa 5 mm überdeckt werden.

An der äusseren Oberfläche des Schlauches 25 schieben Transportbänder 33 den Schlauch 25 in vertikaler Richtung nach unten. Der Schlauch 25 passiert Leitbleche 34, die den Schlauch flachlegen sowie ein Transportwalzenpaar 26, und wird dann auf der Rolle 27 aufgewickelt. Anstelle der Leitbleche 34 können auch Leitwalzen oder andere Einrichtungen verwendet werden, wie sie z.B.

zum allmählichen, faltenfreien Flachlegen von extrudierten Kunststoffschläuchen üblich sind.

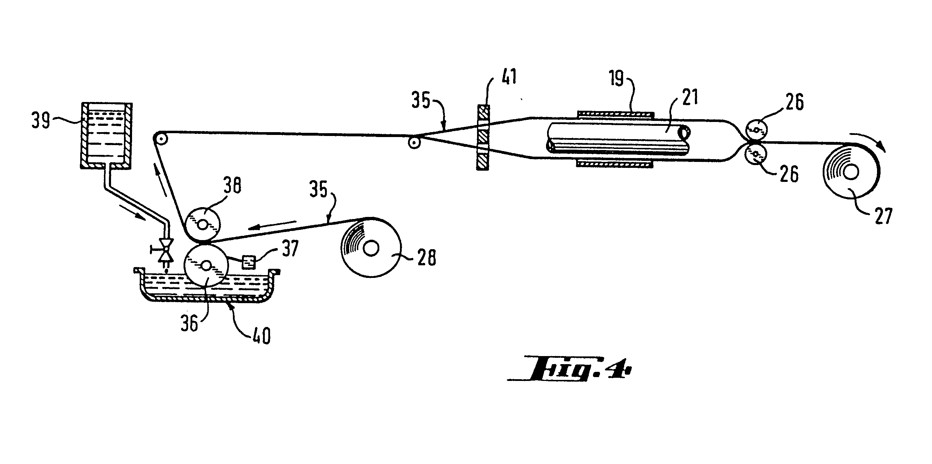

In der Fig. 4 wird der Auftrag der wässrigen Klebstofflösung auf die Bahn gezeigt.

Von der Vorratsrolle 28 wird eine Bahn 35 aus Cellulose in ein Auftragswerk geführt, das aus einer Auftragswalze 36, einem Rakel 37 und einer Gegenwalze 38 besteht. Die Auftragswalze 36 erzeugt einen streifenförmigen Auftrag der Klebstofflösung an einer Randzone der Bahn 35. Die Klebstofflösung wird vom Vorratsbehälter 39 in die Wanne 40 gefördert. Die Bahn 35 wird mittels Formschablone 41, Stützrohr 21 und Anlegehülse 19 zu einem Schlauch mit überlappter Längsnaht geformt, mit dem Abzugsrollenpaar 26 flachgelegt und zu der Aufwickelvorrichtung 27 transportiert.

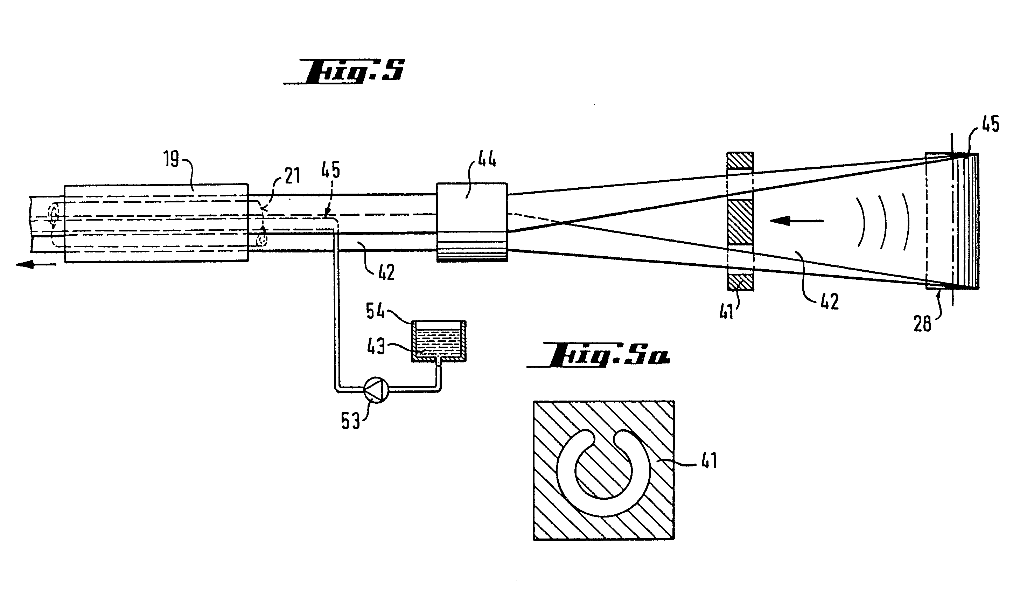

Aus der Fig. 5 ist eine Alternative für den Verfahrensablauf der Schlauchformung und Verklebung der sich überlappenden Randbereiche ersichtlich. Die von einer Wickelrolle 28 abgezogene Bahn 42 durchläuft eine Formschablone 41, im Schnitt in Fig. 5a gezeigt, und eine Überlappungshilfe 44. Danach wird mit dem Düsenkörper 45 die Klebstofflösung 43 in den Überlappungsbereich zugeführt. Mit 53 ist eine Pumpe zur Förderung der Klebstofflösung 43, mit 54 ein Vorratsbehälter für die Klebstofflösung bezeichnet. Die jetzt schlauchförmige Bahn 42 wird verklebt, wobei sie das schematisch dargestellte Stützrohr 21 mit Anlegehülse 19 durchläuft. Der gebildete Schlauch wird auf einer nicht gezeigten Rolle zur Lagerung aufgewickelt.

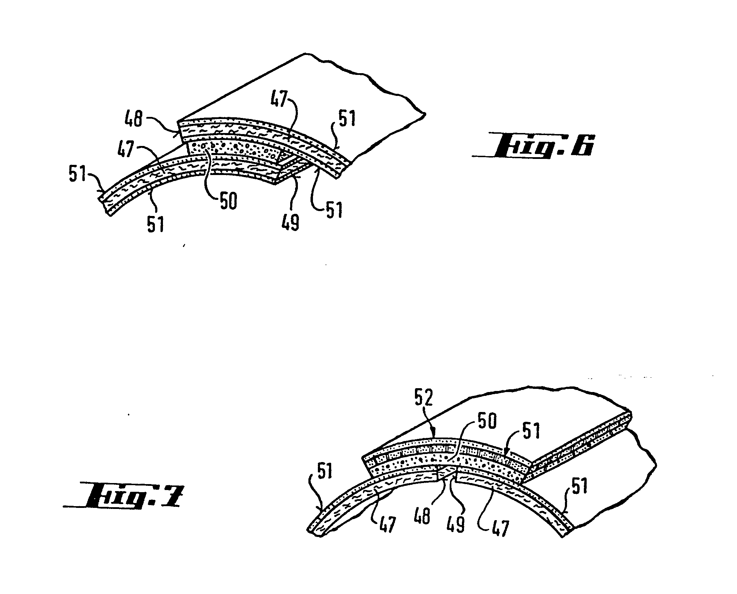

In Fig. 6 sind die Ränder 48 und 49 der Bahn 47 überlappend miteinander verklebt, wobei die Klebstoffschicht 50 sich zwischen den überlappenden Bereichen befindet. Mit 51 sind ihre Verankerungsschichten auf der Bahnoberfläche bezeichnet.

In Fig. 7 stossen die Ränder 48 und 49 der Bahn 47 aneinander und sind mit einem beide Ränder überdeckenden Folienstreifen 52 über eine Klebstoffschicht 50 und eine Verankerungsschicht 51 verbunden.

**Patentansprüche**

1. Aus blatt- oder bahnförmigen, rechteckigem Folienzuschnitt oder endloser Folienbahn, der bzw. die um die Längsachse gebogen ist und dessen bzw. deren längsaxial sich erstreckenden Randbereiche mit einer Klebenaht verbunden sind, bestehende Schlauchhülle für Lebensmittel, insbesondere Wurstwaren, wobei die Schlauchhülle aus Cellulose oder faserverstärkter Cellulose besteht und zumindest im Bereich der Klebenaht eine Schicht aufweist, die ein im wesentlichen wasserunlösliches kationisches Harz zur Verbindung der längsaxial sich erstreckenden Ränder enthält, dadurch gekennzeichnet, dass die Schlauchhülle im Bereich der Klebenaht eine rauchdurchlässige Klebstoffschicht aus wasserunlöslichem, bei Raumtemperatur gehärtetem Kondensationsprodukt von Polyamidpolyamin, aliphatischem Polyamin oder Polyamid mit bifunktionellen Halohydrinen oder deren Derivaten, wie Epichlorhydrin, als einzigen Klebstoff enthält.

2. Schlauchhülle nach Anspruch 1, dadurch gekennzeichnet, dass die, vorzugsweise aus faserverstärkter Cellulose bestehende, Schlauchhülle auf ihrer Innen- und/oder Aussenseite eine haftvermittelnde rauchdurchlässige Schicht enthält.

3. Schlauchhülle nach Anspruch 1 oder 2, dadurch gekennzeichnet, dass den längsaxial sich erstreckenden Rändern nahe Bereiche des Zuschnitts bzw. der Bahn überlappend miteinander verklebt sind, wobei die Klebstoff enthaltende Schicht sich zwischen den sich überlappenden Bereichen befindet und die gegebenenfalls vorhandene haftvermittelnde Schicht auf der Innen- und/oder Aussenseite der Schlauchhülle vorhanden ist.

4. Schlauchhülle nach Anspruch 1 oder 2, dadurch gekennzeichnet, dass die längsaxial sich erstreckenden Ränder aneinander stossen und mit längsaxial sich erstreckenden, beide Rändern nahe Bereiche überdeckenden rauchdurchlässigen Folienstreifen auf der Aussenseite und/oder Innenseite der Schlauchhülle verbunden sind, wobei die Klebstoff enthaltende Schicht sich zwischen dem (den) Folienstreifen und den randnahen Bereichen und die gegebenenfalls vorhandene haftvermittelnde Schicht sich jeweils zwischen Klebstoff und Bahn und gegebenenfalls Folienstreifen befindet.

5. Schlauchhülle nach Anspruch 3, dadurch gekennzeichnet, dass sich zwischen den überlappenden Bereichen ein längsaxial sich erstreckender rauchdurchlässiger Folienstreifen befindet, wobei sich Klebstoff enthaltende Schichten zwischen Folienstreifen und den überlappenden Bereichen des Zuschnitts bzw. der Bahn befinden.

6. Schlauchhülle nach einem der Ansprüche 2 bis 5, dadurch gekennzeichnet, dass die haftvermittelnde rauchdurchlässige Schicht ein gehärtetes kationisches Harz, insbesondere ein Harnstoff-Aldehyd-, Melamin-Aldehyd- oder Phenol-Aldehyd-Harz oder ein Kondensationsprodukt von Polyamidpolyamin, aliphatischem Polyamin oder Polyamid mit bifunktionellen Halohydrinen oder deren Derivaten wie Epichlorhydrin, enthält oder ist.

7. Schlauchhülle nach einem der Ansprüche 1 bis 6, dadurch gekennzeichnet, dass sie gerafft ist, wobei der Verklebungsbereich vorzugsweise spiralförmig um die Längsachse der gerafften Schlauchhülle angeordnet ist.

8. Schlauchhülle nach einem der Ansprüche 1 bis 7, dadurch gekennzeichnet, dass sie auf ihrer Innenseite einen Überzug zur Verbesserung der Schälbarkeit aufweist.

9. Verfahren zur Herstellung der Schlauchhülle nach einem der Ansprüche 1 bis 8, wobei man einen aus Cellulose oder faserverstärkter Cellulose hergestellten blatt- oder bahnförmigen Zuschnitt oder eine aus Cellulose hergestellte endlose Bahn um die Längsachse biegt und zu einem Schlauch formt und die beiden längsaxial sich erstreckenden Randbereiche überlappend – oder auf Stoss angeordnet mit einem beide Randbereiche überlappenden rauchdurchlässigen Folienstreifen – verklebt, dadurch gekennzeichnet, dass man gegebenenfalls zunächst auf dem Zuschnitt bzw. auf der Bahn zumindest im vorgesehenen Verklebungsbereich eine rauchdurchlässige haftvermittelnde Schicht aufträgt, dass man anschliessend vor, während oder nach der Schlauchformung auf die zu verklebenden Flächen des Zuschnitts bzw. der Bahn und/oder des Folienstreifens eine das noch wasserlösliche Kondensationsprodukt von Polyamidpolyamin, aliphatischem Polyamin oder Polyamid mit bifunktionellen Halohydrinen enthaltende, vorzugsweise alkalische, Lösung aufbringt und das Kondensationsprodukt durch Lagerung des gebildeten Schlauches bei einer Temperatur bis zu 40°C härtet und in wasserunlösliche Form überführt.

10. Verfahren nach Anspruch 9, dadurch gekennzeichnet, dass man beide überlappende Randbereiche der Schlauchhülle mit einem zwischen ihnen angeordneten rauchdurchlässigen Folienstreifen verklebt, welcher beidseitig eine den noch wasserlöslichen Klebstoff enthaltende Schicht aufweist, wobei man diesen doppelseitig klebenden Folienstreifen zunächst mit seiner ersten Oberfläche mit einer der beiden axial sich erstreckenden Randzonen des Zuschnitts bzw. der Bahn verklebt und danach unter Bildung der Schlauchform die zweite klebende Oberfläche des Folienstreifens mit der anderen axial sich erstreckenden Randzone des Zuschnitts bzw. der Bahn verklebt.

11. Verfahren nach Anspruch 9 oder 10, dadurch gekennzeichnet, dass man zur Verbesserung der Rauchdurchlässigkeit vor dem Bilden der Verklebungsnaht die haftvermittelnde Schicht, zumindest soweit sie sich auf der (den) längsaxial sich erstreckenden Randzone(n) des Zuschnitts oder der Bahn oder auf dem Folienstreifen befindet, mit Durchlässen in Form von Öffnungen oder Poren versieht.

12. Verfahren nach einem der Ansprüche 9 bis 11, dadurch gekennzeichnet, dass man zur Verbesserung der Rauchdurchlässigkeit die den haftvermittelnden Stoff enthaltende Lösung oder Dispersion mit Unterbrechungen und/oder Ausnehmungen, zumindest auf die zu verklebenden Flächen des Zuschnitts oder der Bahn und/oder Fläche(n) des Folienstreifens aufbringt.

13. Verwendung der Schlauchhülle nach einem der Ansprüche 1 bis 7 als Verpackungshülle für zu räuchernde Lebensmittel, insbesondere als künstliche Wursthaut für zu räuchernde Wurstwaren.

14. Verwendung der Schlauchhülle nach einem der Ansprüche 1 bis 7 als künstliche Wursthaut für zu räuchernde Würste vom Brühwursttyp.

15. Verwendung der Schlauchhülle nach einem der Ansprüche 1 bis 8 zur Herstellung von Würstchen mit Eigenhaut.

**Claims**

1. A tubular casing for foodstuffs, in particular sausages, comprising a sheet-like or web-like, rectangular cut piece of film or continuous web of film, which is curved around the longitudinal axis and the edge regions of which, running parallel to the longitudinal axis, are joined by a glued seam, the tubular casing being composed of cellulose or fiber-reinforced cellulose and, at least in the region of the glued seam, having a layer which contains a substantially water-insoluble cationic resin for joining the longitudinally running edges, wherein the tubular casing contains, in the region of the glued seam, a smoke-permeable adhesive layer of a water-insoluble condensation product, cured at room temperature, of a polyamide-polyamine, an aliphatic polyamine or a polyamide with bifunctional halohydrins or derivatives thereof, such as epichlorohydrin, as the sole adhesive.

2. The tubular casing as claimed in claim 1, which is preferably composed of fiber-reinforced cellulose and contains an adhesion-promoting smoke-permeable layer on its inside and/or outside.

3. The tubular casing as claimed in claim 1 or 2, wherein regions, close to the longitudinally running edges, of the cut piece or of the web are glued together with an overlap, the adhesive-containing layer being located between the mutually overlapping regions and the adhesion-promoting layer, if present, being disposed on the inside and/or outside of the tubular casing.

4. The tubular casing as claimed in claim 1 or 2, wherein the edges running parallel to the longitudinal axis abut and are joined by smoke-permeable film strips, which run parallel to the longitudinal axis and cover both regions close to edges, on the outside and/or inside of the tubular casing, the adhesive-containing layer being located between the film strip or strips and the regions close to the edges, and the adhesion-promoting layer, if present, being located in each case between the adhesive and the web and, if appropriate, the film strip.

5. The tubular casing as claimed in claim 3, wherein a smoke-permeable film strip, running parallel to the longitudinal axis, is located between the overlapping regions, adhesive-containing layers being located between the film strip and the overlapping regions of the cut piece or of the web.

6. The tubular casing as claimed in any of claims 2 to 5, wherein the adhesion-promoting smoke-permeable layer contains or is a cured cationic resin, in particular an urea/aldehyde, melamine/aldehyde or phenol/aldehyde resin or a condensation product of a polyamide-polyamine, aliphatic polyamine or polyamide with bifunctional halohydrins or derivatives thereof, such as epichlorohydrin.

7. The tubular casing as claimed in any of claims 1 to 6, which is shirred, the gluing region preferably being arranged helically around the

27    **0 076 436**    28

longitudinal axis of the shirred tubular casing.

8. The tubular casing as claimed in any of claims 1 to 7, which, on its inside, has a coating which improves the ease of peeling.

9. A process for the manufacture of the tubular casing as claimed in any of claims 1 to 8, a sheet-like or web-like cut piece made of cellulose or fiber-reinforced cellulose, or a continuous web made of cellulose, being curved around the longitudinal axis and being shaped into a tube, and the two edge regions, running parallel to the longitudinal axis, being glued to one another, with an overlap or in an abutting arrangement, whereby, in the abutting arrangement, glueing of the edges is effected to a smoke-permeable film strip overlapping both edge regions, said process comprising first applying, if appropriate, a smoke-permeable adhesion-promoting layer to the cut piece or the web, at least in the intended glueing region, then applying, before, during or after the formation of the tube, a preferably alkaline solution, which contains the still water-soluble condensation product of a polyamide-polyamine, aliphatic polyamine or polyamide with bifunctional halohydrins, to those surface areas of the cut piece or of the web and/or of the film strip which are to be glued, and curing the condensation product by storing the resulting tube at a temperature of up to 40°C and thus converting the condensation product into the insoluble form.

10. The process as claimed in claim 9, wherein the two overlapping edge regions of the tubular casing are glued with a smoke-permeable film strip which is arranged between them and which carries, on both sides, a layer containing the still water-soluble adhesive, this doublesided adhesive film strip being first glued, with its first surface, to one of the two axially running edge zones of the cut piece or of the web and then, forming the tubular shape, the second adhesive surface of the film strip being glued to the other axially running edge zone of the cut piece of the web.

11. The process as claimed in claim 9 or 10, wherein, in order to improve the permeability to smoke, the adhesion-promoting layer, at least as far as it is located on the longitudinally running edge zone or zones of the cut piece or of the web or on the film strip, is provided with passages in the form of orifices or pores, before the glued seam is formed.

12. The process as claimed in any of claims 9 to 11, wherein, in order to improve the permeability to smoke, the solution or dispersion containing the adhesion-promoting substance is applied with interruptions and/or blank areas at least to those surface areas of the cut piece or of the web and/or the surface or surfaces of the film strip which are to be glued.

13. The use of the tubular casing as claimed in any of claims 1 to 7 as a packaging wrap for foodstuffs to be smoked, in particular as an artificial sausage casing for sausages which are to be smoked.

14. The use of the tubular casing as claimed in any of claims 1 to 7 as an artificial sausage casing for sausages, to be smoked, of the type of cooked sausages.

15. The use of the tubular casing as claimed in any of claims 1 to 8 for the production of small sausages with integral skin.

## Revendications

1. Enveloppe tubulaire pour aliments, en particulier des produits de charcuterie, constituée d'un morceau rectangulaire en forme de feuille ou de bande ou d'une bande de feuille sans fin, qui est cintré(e) autour de son axe longitudinal et dont la ou les zone(s) des bords s'étendant parallèlement à l'axe longitudinal sont liés par un joint collé, l'enveloppe tubulaire étant constituée de cellulose ou de cellulose renforcée de fibres et présentant au moins dans la région du joint collé une couche qui contient une résine cationique pratiquement insoluble dans l'eau pour la liaison des bords s'étendant dans le sens longitudinal, caractérisée en ce que l'enveloppe tubulaire contient dans la région du joint collé une couche d'adhésif perméable à la fumée constituée d'un produit de condensation insoluble dans l'eau durci à la température ambiante d'une polyamide polyamine, d'une polyamine aliphatique ou d'un polyamide avec des halohydrines bifonctionnelles ou leurs dérivés, tels que l'épichlorhydrine, comme adhésif unique.

2. Enveloppe tubulaire suivant la revendication 1, caractérisé en ce que l'enveloppe tubulaire composée de préférence de cellulose renforcée de fibres, contient sur ses faces interne et/ou externe une couche perméable à la fumée favorisant l'adhérence.

3. Enveloppe tubulaire suivant les revendications 1 ou 2, caractérisée en ce que des zones proches des bords s'étendant parallèlement à l'axe longitudinal du morceau découpé ou de la bande sont collées entre elles en se chevauchant, la couche contenant la colle se trouvant entre les zones se chevauchant, et la couche favorisant l'adhérence éventuellement présente étant présente sur la face interne et/ou la face externe de l'enveloppe tubulaire.

4. Enveloppe tubulaire suivant la revendication 1 ou 2, caractérisée en ce que les bords s'étendant parallèlement à l'axe longitudinal butent l'un contre l'autre et sont liés du côté extérieur et/ou intérieur de l'enveloppe tubulaire avec des rubans perméables à la fumée, s'étendant parallèlement à l'axe longitudinal et recouvrant les zones proches des deux bords, la couche contenant la colle se trouvant entre le ou les ruban(s) de feuille et les zones proches des bords, et la couche favorisant l'adhérence éventuellement présente se trouvant entre la colle et la bande de feuille et le cas échéant le ruban.

5. Enveloppe tubulaire suivant la revendication 3, caractérisée en ce qu'un ruban perméable à la fumée s'étendant parallèlement à l'axe longitudinal se trouve entre les zones se recouvrant, des couches contenant de la colle se trouvant entre le ruban et les zones se recouvrant du morceau découpé ou de la bande.

6. Enveloppe tubulaire suivant l'une des revendications 2 à 5, caractérisée en ce que la couche perméable à la fumée favorisant l'adhérence contient ou est une résine cationique durcie, en particulier une résine urée-aldéhyde, mélamine-aldéhyde ou phénol-aldéhyde ou un produit de condensation d'une polyamide polyamine, d'une polyamine aliphatique ou d'un polyamide avec des halohydrines bifonctionnelles ou leurs dérivés tels que l'épichlorhydrine.

7. Enveloppe tubulaire suivant l'une des revendications 5 et 6, caractérisée en ce qu'elle est repliée, la zone de collage étant de préférence disposée en spirale autour de l'axe longitudinal de l'enveloppe tubulaire repliée.

8. Enveloppe tubulaire suivant l'une des revendications 1 à 7, caractérisée en ce qu'elle présente sur sa face interne un revêtement pour améliorer l'aptitude au pelage.

9. Procédé de fabrication de l'enveloppe tubulaire suivant l'une des revendications 1 à 8, dans lequel on cintre autour de l'axe longitudinal un morceau découpé en forme de feuille ou de bande en cellulose ou en cellulose renforcée par des fibres, ou une bande sans fin en cellulose et on le transforme en une enveloppe, et on colle les deux zones des bords s'étendant parallèlement à l'axe longitudinal se recouvrant ou jointives, avec un ruban perméable à la fumée recouvrant les deux zones des bords, caractérisé en ce qu'on applique le cas échéant d'abord sur le morceau découpé ou sur la bande, au moins dans la zone de collage prévue, une couche favorisant l'adhérence perméable à la fumée, puis en ce qu'on applique avant, pendant ou après la formation de l'enveloppe, sur les surfaces à coller du morceau découpé ou de la bande et/ou du ruban, une solution de préférence alcaline contenant le produit de condensation, encore soluble dans l'eau d'une polyamide polyamine, d'une polyamine aliphatique ou d'un polyamide avec des halohydrines bifonctionnelles, et en ce qu'on durcit le produit de condensation par stockage de l'enveloppe formée à une température allant jusqu'à 40°C et en ce qu'on l'amène sous une forme insoluble dans l'eau.

10. Procédé suivant la revendication 9, caractérisé en ce qu'on colle les deux zones des bords de l'enveloppe tubulaire se recouvrant avec un ruban perméable à la fumée disposée entre elles, qui présente des deux côtés une couche contenant un adhésif encore soluble dans l'eau, ce ruban collant des deux côtés étant collé d'abord par sa première face avec une des deux zones des bords s'étendant axialement du morceau découpé ou de la bande, puis la deuxième face collante du ruban étant collée avec l'autre zone de bord s'étendant axialement du morceau découpé ou de la bande pour former l'enveloppe tubulaire.

11. Procédé suivant la revendication 9 ou 10 caractérisé en ce que pour améliorer la perméabilité à la fumée avant la formation du joint collé, on munit la couche favorisant l'adhérence, dans la mesure ou elle se trouve sur la ou les zone(s) de bord s'étendant parallèlement à l'axe longitudinal du morceau coupé ou de la bande ou sur le ruban de passages sous la forme d'ouvertures ou de pores.

12. Procédé suivant l'une des revendications 9 à 11 caractérisé en ce que pour améliorer la perméabilité à la fumée, on applique la solution ou la dispersion contenant la substance favorisant l'adhérence, avec des interruptions et/ou des régions non revêtues, au moins sur les surfaces à coller du morceau découpé ou de la bande et/ou sur la ou les surface(s) du ruban.

13. Utilisation de l'enveloppe tubulaire suivant l'une des revendications 1 à 7 comme gaine d'emballage pour des aliments à fumer, en particulier comme peau de saucisse artificielle pour des produits de charcuterie à fumer.

14. Utilisation de l'enveloppe tubulaire suivant l'une des revendications 1 à 7 comme peau de saucisse artificielle pour des saucisses à fumer du type saucisse cuite.

15. Utilisation de l'enveloppe tubulaire suivant l'une des revendications 1 à 8 pour la fabrication de petites saucisses ayant leur peau propre.

**Fig. 1**

Fig.2

**Fig. 3**

21

Fig. 4.

_Fig. 5_

_Fig. 5a_

Fig. 6

Fig. 7